(19) Europäisches Patentamt / European Patent Office / Office européen des brevets

(11) **EP 3 375 609 B1**

(12) **EUROPEAN PATENT SPECIFICATION**

(45) Date of publication and mention
of the grant of the patent:
**17.02.2021 Bulletin 2021/07**

(51) Int Cl.:
***B33Y 70/00*** *(2020.01)* ***B29C 64/10*** *(2017.01)*

(21) Application number: **18161007.2**

(22) Date of filing: **09.03.2018**

(54) **RESIN POWDER FOR SOLID FREEFORM FABRICATION AND DEVICE FOR SOLID FREEFORM FABRICATION OBJECT**

HARZPULVER ZUR SOLID-FREEFORM-HERSTELLUNG UND VORRICHTUNG FÜR SOLID-FREEFORM-HERSTELLUNGSOBJEKT

POUDRE DE RÉSINE POUR FABRICATION DE FORME LIBRE SOLIDE ET DISPOSITIF DE FABRICATION D'UN OBJET DE FABRICATION DE FORME LIBRE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2017 JP 2017049042**
**07.02.2018 JP 2018019742**

(43) Date of publication of application:
**19.09.2018 Bulletin 2018/38**

(73) Proprietor: **Ricoh Company, Ltd.**
**Tokyo 143-8555 (JP)**

(72) Inventors:
• **TAMOTO, Nozomu**
**Ohta-ku, Tokyo 143-8555 (JP)**
• **IIDA, Sohichiroh**
**Ohta-ku, Tokyo 143-8555 (JP)**
• **SAITO, Akira**
**Ohta-ku, Tokyo 143-8555 (JP)**
• **YAMASHITA, Yasuyuki**
**Ohta-ku, Tokyo 143-8555 (JP)**
• **IWATSUKI, Hitoshi**
**Ohta-ku, Tokyo 143-8555 (JP)**
• **HIGUCHI, Shinzo**
**Ohta-ku, Tokyo 143-8555 (JP)**
• **KAMODA, Kiichi**
**Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
**WO-A1-2013/138204    WO-A1-2015/192166**
**WO-A2-2009/135521    US-A1- 2015 148 467**

**Description**

Technical Field

The present invention relates to a resin powder for solid freeform fabrication and a device for manufacturing a solid freeform fabrication object.

Description of the Related Art

Powder additive manufacturing is a fabrication method of solidifying layer by layer by applying a laser or a binder to a powderym aterial.

The method of applying a laser is referred to as powder bed fusion (PBF) including known methods such as a selective laser sintering (SLS) method of forming a solid freeform fabrication object with select ive irradiation of laser beams and a selective mask sintering (SMS) method of applying laser beams in a planar form using a mask. The method of using a binder includes, for example, binder jetting, which includes discharging ink containing a binder resin byi nk jetting, etc. to form a solid freeform fabrication object.

Of these, a device employing the PBF method selectively irradiates a thin layer of powder of metal, ceramics, or resin with laser beams to melt the powder to cause it to adhere to each other to form a layer thereof and repeats this operation to sequentially laminate the layers to obtain a solid freeform fabrication object (3D object).

In the case of using resin powder for the PBF method, while maintaining inner stress between the thin layers low and relaxing the stress, the layers of the resin powder supplied to a supply tank are heated to temperatures close to the softening point of the resin. T hereafter, the heated layer is selectivelyi rradiated withl aser beams to raise the temperature of the resin powder to the softening point thereof or higher so that the resin powder is fused and attached to each other for solid freeform fabrication.

Currently, polyamide resins are commonly used in the PBF method. I n particular, polyamide 12 is preferably used because it has a relatively low melting point among polyamides, incurs less heat contraction, and has poor water absorbency.

In addition, demands for manufacturing not only prototypes but also products have been increasing so that research and development and launching of various types ofresins haven been expected.

WO-A-2009/135521 discloses fibres for use in the production of a molded body formed in layers, by forming a suitable material into an elongated fibre form having an average diameter of 1 to 500 $\mu$m, and cutting the elongated fibre into pieces of fibre.

WO-A-2013/138204 discloses a muli-component micro-pellet useful as a consumable material for making objects by powder based additive manufacturing is disclosed. A method of making said micro-pellet is also disclosed. An object made by using said micro-pellets is also disclosed.

SUMMARY

The invention provides a resin powder as claimed in claim 1, a manufacturing device as claimed in claim 13, and a method as claimed in claim 15.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1A is a diagram illustrating a schematic perspective view of an example of a cylindrical form;
FIG. 1B is a diagram illustrating a side view of the cylindrical form illustrated in FIG. 1A;
FIG. 1C is a diagram illustrating a side view of an example of a cylindrical form with no points at ends;
FIG. 1D is a diagram illustrating a side view of another example of a cylindrical form with no points at ends;
FIG. 1E is a diagram illustrating a side view of another example of a cylindrical form with no points at ends;
FIG. 1F is a diagram illustrating a side view of another example of a cylindrical form with no points at ends;
FIG. 1G is a diagram illustrating a side view of another example of a cylindrical form with no points at ends;
FIG. 1H is a diagram illustrating a side view of another example of a cylindrical form with no points at ends;
FIG. 1I is a diagram illustrating a side view of another example of a cylindrical form with no points at ends;
FIG. 2 is a micrograph of scanning electron microscope illustrating an example of a cylindrical form with no points at ends;

FIG. 3 is a schematic diagram illustrating an example of the device for manufacturing a solid freeform fabrication object (three-dimensional object) according to an embodiment of the present invention;

FIG. 4A is a schematic diagram illustrating an example of the process of forming a powder layer having a smooth surface;

FIG. 4B is a schematic diagram illustrating an example of the process of forming a powder layer having a smooth surface;

FIG. 4C is a schematic diagram illustrating an example of the process of dripping a liquid material for solid freeform fabrication;

FIG. 4D is a schematic diagram illustrating an example of the process of newly forming another resin powder layer in a powder storage tank for solid freeform fabrication;

FIG. 4E is a schematic diagram illustrating an example of the process of newly forming another resin powder layer in a powder storage tank for solid freeform fabrication; and

FIG. 4F is a schematic diagram illustrating an example of the process of dripping a liquid material for solid freeform fabrication again.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

Resin Powder for Solid Freeform Fabrication

The resin powder for solid freeform fabrication (hereinafter referred to as resin powder) of the present disclosure contains pillar-like form particles having an average circularity of 0.85 to 0.98 in the particle diameter range of from 0.5 to 200 $\mu$m and other optional components.

The resin powder for solid freeform fabrication of the present disclosure is based on the knowledge that, typically, layers of a resin powder for solid freeform fabrication have insufficient density so that non-target areas are solidified with laser beams passing through voids, which tends to cause blocking.

In addition, the resin powder for solid freeform fabrication of the present disclosure is based on the knowledge that, in typical solid freeform fabrication technologies, many hollow walls are formed so that an obtained object swells after sintering and the density thereof decreases, which significantly degrades dimension accuracy and strength.

Pillar-like Form Particle

The resin powder for solid freeform fabrication of the present disclosure contains pillar-like form particles and other optional components.

Average Circularity

The average circularity of the resin powder for solid freeform fabrication of the present disclosure is 0.85 or higher in the particle diameter range of from 0.5 to 200 $\mu$m. The upper limit of the average circularity is 0.98 or less. The average circularity is an index for the degree of circularity and the average circularity of 1 means true circle. To determine the average circularity, circularity is firstly obtained by the following relation 1, where S represents an area (number of pixels) and L represents a perimeter. The arithmetical means thereof is obtained as the average circularity.

$$Circularity = 4\pi S/L^2 \qquad Relation\ 1$$

The average circularity can be easily obtained by, for example, digitization based on the measuring using a wet process flow type particle size and form analyzer (FPIA-3000, manufactured by Sysmex Corporation). This wet process flow type particle size and form analyzer takes particle images at high speed in a liquid suspension flowing in a glass cell by a charge-coupled device (CCD) and analyzes individual particle images in real time. This device, which is capable of taking images of such particles and image analyzing, is suitable to obtain the average circularity in the present disclosure. The number of measuring counts of the particles has no particular limit and is preferably 1,000 or greater.

Due to the resin powder for solid freeform fabrication having a pillar-like form, voids between particles can be reduced to minimal in a formed layer. As a result, strength and dimension accuracy of an obtained solid freeform fabrication object can be increased. As the pillar-like form, in terms of productivity and stability of fabrication, an article having a base and an upper surface significantly parallel to each other, which is close to a straight pillar-like form, is preferable. The form of the resin powder for solid freeform fabrication can be observed and determined by, for example, scanning electron microscope (S4200, manufactured by Hitachi Ltd.), wet-process particle size and form analyzer (FPIA-3000, manufactured by Sysmex Corporation), etc.

The pillar-like form particle includes a base and an upper surface with a pillar-like form or tubular form. The form of the base or the upper surface has no particular limit and can be suitably selected to suit to a particular application. For example, a resin particle having a significantly cylindrical form or a polygonal cylindrical form is allowed.

The pillar-like form particle includes an article having a significant cylindrical form having a circular or ellipsoidal base and upper surface and an article having a polygonal cylindrical form having a square or hexagon base and upper surface. As long as the portion between a base and an upper surface has a pillar-like area or a tubular area, the form of the base and the form of the upper surface are not necessarily the same. In addition, the form may be a straight solid in which the pillar portion (side surface) is orthogonal to the base or the upper surface or a slanted solid in which the pillar portion (side surface) is not orthogonal to the base or the upper surface.

The pillar-like form particle has a pillar-like form having a base (bottom) and an upper surface (top). Of these, forms having no points at ends are preferable. The point means an angle portion existing in the pillar-like form.

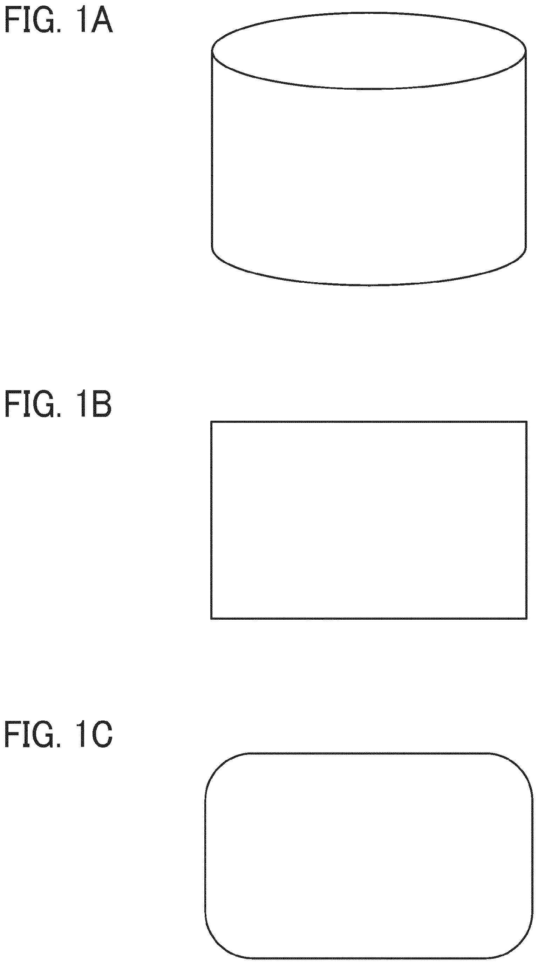

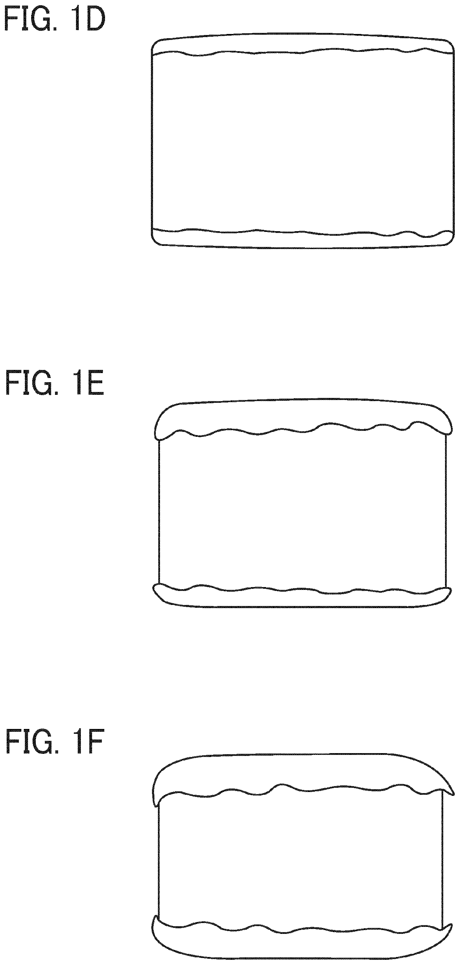

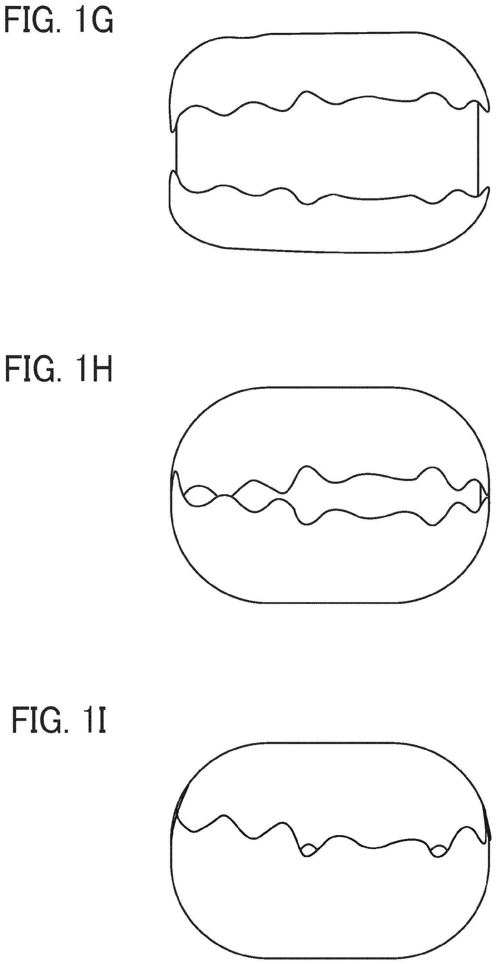

The form of the pillar-like form particle is described with reference to FIGS. 1A to 1I. FIG. 1A is a diagram illustrating a schematic perspective view of an example of a cylindrical form. FIG. 1B is a diagram illustrating a side view of the cylindrical form illustrated in FIG. 1A. FIG. 1C is a diagram illustrating a side view of an example of a cylindrical form with no points at ends. FIGS. 1D to 1I are diagrams illustrating side views of other examples of cylindrical forms with no points at ends.

As the cylindrical form illustrated in FIG. 1A is observed from side, the form is rectangular as illustrated in FIG. 1B. It has four angled portions, i.e., points. Examples of forms with no points at ends are illustrated in FIGS. 1C to 1I. Whether a pillar-like form has a point is confirmed by a projected image of the side plane of the pillar-like form particle. For example, the side of a pillar-like form particle is observed by a scanning electron microscope (S4200, manufactured by Hitachi Ltd.), etc. to acquire a two-dimensional image. In this case, the projected image has four sides. When the portion formed of two adjacent sides is defined as an end part, if the end part is formed of only two adjacent straight lines, an angle is formed and the particle has a point. If the end part is arc as illustrated in FIGS. 1C to 1I, no point is formed at the end portion.

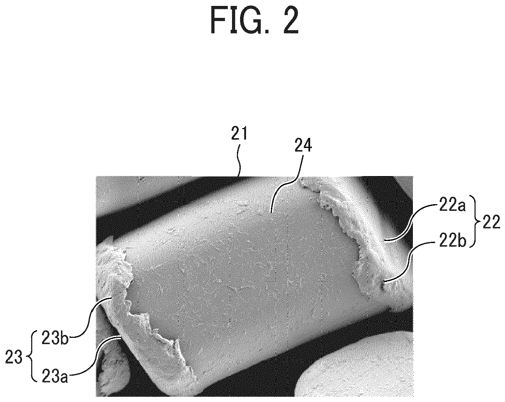

As illustrated in FIG. 2, a pillar-like form 21 includes a first surface 22, a second surface 23, and a side surface 24.

The first surface 22 includes a first opposing surface 22a and a perimeter area 22b having a form extending along the side surface 24. The perimeter area 22b of the first area 22 is a continuous surface with the first opposing surface 22a via a curved surface and significantly orthogonal to the first opposing surface 22a. The second surface 23 includes a second opposing surface 23a facing the first opposing surface 22a and a perimeter area 23b having a form extending along the side surface 24. The perimeter area 23b of the second area 23 is a continuous surface with the second opposing surface 23a via a curved surface and significantly orthogonal to the second opposing surface 23a. The side surface 24 is adjacent to the first surface 22 and the second surface 23. In addition, the perimeter area 22b of the first surface 22 and the perimeter area 23b of the second surface 23 extend on the side surface 24.

The form of the perimeter area 22b of the first surface 22 and the perimeter area 23b of the second surface 23 (both of which are hereinafter also referred to as perimeter area) is at least distinguishable from the side surface 24 in a scanning electron microscope (SEM) image. For example, a form of the perimeter area partially integrated with the side surface 24, a form of the perimeter area adjacent to the side surface 24, a form having a space between the perimeter area and the side surface 24 are allowed. In addition, the perimeter area 22b of the first surface 22 and the perimeter area 23b of the second surface 23 are preferably located along a surface direction significantly identical to the surface direction of the side surface 24.

As illustrated in FIG. 2, the perimeter area 22b of the first surface 22 and the perimeter area 23b of the second surface 23 extend along the side surface 24 and is situated thereon. In addition, the structure of the first surface 22 and the second surface 23 covering around the connection area of the perimeter area 22b of the first surface 22 and the perimeter area 23b of the second surface 23 and the side surface 24 is also referred to as a bottle cap form.

The pillar-like form particle having no points at ends can have a higher average circularity due to the form thereof, so that flowability is enhanced and packing density can be more increased. This is extremely suitable to enhance the strength of a solid freeform fabrication object and dimension accuracy.

Significantly Cylindrical Form

There is no specific limit to the significantly cylindrical form. It can be suitably selected to suit to a particular application. For example, true cylindrical form and cylindroid-like form are preferable. Of these, resin particles having a form closer to a true cylindrical form are preferable. In addition, the significantly cylindrical (significantly circular) of the resin particle having a significantly cylindrical form has a ratio of the major axis to the minor axis of from 1 to 10 and also includes an article having a partially chipped-off portion.

The significantly cylindrical form preferably has significantly circular planes facing each other. The size of the circles facing each other may not be identical. However, the diameter ratio of the large circle to the small circle is preferably 1.5 or less and more preferably 1.1 or less to increase the density.

The long side of the base of the significantly cylindrical form has no particular limit and can be suitably selected to suit to a particular application. For example, it is preferably from 5 to 200 $\mu$m. The long side of the base in the resin particle having a significantly cylindrical form means the diameter of the base. When the circle portion of the significantly cylindrical form is an ellipse, the long side means the major axis. The height (length between base and upper surface) of the significantly cylindrical form has no particular limit and can be suitably selected to suit to a particular application. For example, the height is preferably from 5 to 200 $\mu$m. When the height of the significantly cylindrical form is within the range of from 5 to 200 $\mu$m, fly of the resin powder for solid freeform fabrication occurring during forming a powder layer can be reduced. As a result, the surface of the powder layer becomes smooth. In addition, voids between resin powder for solid freeform fabrication can be reduced, thereby further enhancing surface property and dimension accuracy of a solid freeform fabrication object.

The particle having a significant cylindrical form may have a long side of the base and a height of less than 5 $\mu$m or greater than 200 $\mu$m. However, the amount ratio of such particles is preferably less. To be specific, the proportion of the particles having a significant cylindrical form having a long side of the base and a height of from 5 to 200 $\mu$m is preferably 50 percent or more and more preferably 75 percent of more to total amount of the resin powder for solid freeform fabrication. The proportion of the particle having a significantly cylindrical form can be obtained by, for example, collecting resin powder for solid freeform fabrication, observing it with scanning electron microscope (SEM), and counting the number of the particles having a significantly cylindrical form having a long side of the base and a height of from 5 to 200 $\mu$m to the number of all the particles in the obtained SEM image.

Polygonal Cylindrical Form

There is no specific limit to the polygonal cylindrical form. It can be suitably selected to suit to a particular application. For example, it includes triangular pole, square pole including cuboid, pentagonal cylinder, and hexagonal cylinder. Of these, cuboid is preferable in terms that resin powder for solid freeform fabrication can be more densely packed. These forms are just schematic and include articles having chopped-off or deformed portion.

The long side of the base of the polygonal cylindrical form has no particular limit and can be suitably selected to suit to a particular application. For example, it is preferably from 5 to 200 $\mu$m. The long side of the base of the polygonal cylindrical particle means the longest diagonal line of all the orthogonal lines of the base of the polygonal cylindrical form. The height (length between base and upper surface) of the polygonal cylindrical form has no particular limit and can be suitably selected to suit to a particular application. For example, the height is preferably from 5 to 200 $\mu$m. When the height is within the range, fly of the resin powder for solid freeform fabrication occurring during forming a powder layer can be reduced. As a result, the surface of the powder layer becomes smooth. In addition, voids between resin powder for solid freeform fabrication can be reduced, thereby further enhancing surface property and dimension accuracy of a solid freeform fabrication object.

The particle having a polygonal cylindrical form may have a long side of the base and a height of less than 5 $\mu$m or greater than 200 $\mu$m. However, the amount ratio of such particles is preferably less. To be specific, the proportion of the polygonal cylindrical form particles having a long side of the base and a height of from 5 to 200 $\mu$m is preferably 50 percent or more and more preferably 75 percent of more to total amount of the resin powder for solid freeform fabrication. The proportion of the polygonal cylindrical form particles can be obtained by, for example, collecting resin powder for solid freeform fabrication, observing it with scanning electron microscope (SEM), and counting the number of the polygonal cylindrical form particles having a long side of the base and a height of from 5 to 200 $\mu$m to the number of all the particles of the obtained SEM images.

It is preferable that the long side of the base and the height of the pillar-like form particle be closer to each other. For example, the ratio of the height to the long side of the base is preferably from 0.5 to 2.0, and more preferably from 0.7 to 1.5. In the range specified above, when forming a layer of a resin powder during solid freeform fabrication, voids are less and the resin powder for solid freeform fabrication tends to be densely packed. This is effective to enhance the strength and the dimension accuracy of an obtained solid freeform fabrication object.

It is most preferable that all the pillar-like form particles of the resin powder for solid freeform fabrication have no points at end portions. It is more preferable that the proportion of the pillar-like form particles having no points at end portions be high. Specifically, the proportion of the pillar-like form particles having no points at end portions to all the resin powder for solid freeform fabrication is preferably 50 percent or more, more preferably 75 percent or more, and furthermore preferably 90 percent or more. Due to this, the average circularity of the resin powder increases, which is preferable for the present disclosure.

The proportion of the pillar-like form particle having no points at end portions can be determined by, for example, observing the resin powder with a scanning electron microscope (S4200, manufactured by Hitachi Ltd.), etc. to obtain two-dimensional images and calculating the proportion of the pillar-like form particles having no points at end portions to all the pillar-like form particles. For example, the two-dimensional images of 10 vision fields are obtained using the scanning electron microscope mentioned above to obtain the proportion of the pillar-like form particles having no points at ends to all the pillar-like form particles and calculate the average.

The pillar-like form particle having no points at end portions has not necessarily a neat significantly cylindrical or polygonal form but may include a form with constriction, a form having an extended end portion, a crushed form, or a twisted or curved form in the projected image of side plane.

To make the pillar-like form particle in resin powder pointless at end portions, any method of rounding points of pillar-like form particles can be used. For example, it is possible to use known spheroidizing processing devices utilizing mechanical pulverization of high speed rotation or high speed impact or surface melting utilizing mechanical abrasion.

The average thickness of the powder layer in a solid freeform fabrication device employing powder additive manufacturing is preferably from about 5 to about 500 $\mu$m and more preferably from about 50 to about 200 $\mu$m although it depends on the application purpose. Therefore, the 50 percent cumulative volume particle diameter of the resin powder for solid freeform fabrication is preferably from 5 to 200 $\mu$m and more preferably from 20 to 150 $\mu$m in terms of dimension stability. When the 50 percent cumulative volume particle diameter is within the range specified above, fly of the resin powder for solid freeform fabrication occurring during forming a powder layer can be reduced. As a result, the surface of the powder layer becomes smooth. In addition, voids between resin powder for solid freeform fabrication can be reduced, thereby further enhancing surface property and dimension accuracy of a solid freeform fabrication object. The 50 percent cumulative volume particle diameter can be measured by, for example, particle size distribution measuring device (microtrac MT3300 EXII, manufactured by MicrotracBEL Corp).

As the pillar-like form particle of the resin powder for solid freeform fabrication, articles close to mono-dispersion formed as a collective entity having a uniform height with no deviation about the form and size are preferable. Due to this, the dimension accuracy and the strength of a solid freeform fabrication object can be further improved. Specifically, the particle diameter ratio (Mv/Mn) of the volume average particle diameter Mv of the resin powder for solid freeform fabrication to the number average particle diameter Mn of the resin powder for solid freeform fabrication is preferably 2.00 or less, more preferably 1.5 or less, and particularly preferably 1.2 or less.

The volume average particle diameter Mv of the resin powder for solid freeform fabrication is preferably from 5 to 200 $\mu$m and more preferably from 20 to 100 $\mu$m.

The number average particle diameter Mn of the resin powder for solid freeform fabrication is preferably from 2.5 to 200 $\mu$m and more preferably from 10 to 100 $\mu$m.

The volume average particle diameter Mv and the number average particle diameter Mn can be measured by using a particle size distribution measuring instrument (Microtrac MT3300EXII, manufactured by MicrotracBEL Corp.).

Specific Gravity

The specific gravity of the resin powder for solid freeform fabrication is preferably 0.8 or higher, 0.96 or higher, and particularly preferably 1.0 or higher. When the specific gravity is 0.8 or greater, it is possible to prevent secondary agglomeration of the resin powder for solid freeform fabrication while forming (recoating) a powder layer. In terms of the demand for light-weight for substitution of metal, the upper limit is preferably 3.0 or lower, 1.50 or lower, and particularly preferably 1.40 or lower. The specific gravity can be obtained by measuring true specific gravity. The true specific gravity is obtained by measuring the density of a sample by measuring the mass thereof from the volume of the sample. The volume is obtained by changing the volume and pressure of gas (He gas) at a constant temperature by using a dry-process pycnometer (AccuPyc 1330, manufactured by Shimadzu Corporation) utilizing gas-phase replacement method.

Resin

The resin powder for solid freeform fabrication preferably contains a thermoplastic resin. The thermoplastic resin is plasticized and melted upon application of heat. Of the thermoplastic resins, crystalline resins are usable. The crystalline resin has a melt peak as measured according to ISO 3146 regulation (plastic transition temperature measuring method, JIS K7121 format).

The resin powder preferably has a melting point of 100 degrees C or higher as measured according to ISO 3146 regulation. It is preferable that the melting point of the resin powder for solid freeform fabrication as measured according to ISO 3146 regulation be 100 degrees C or higher because it covers the range of the heat resistance temperature for exteriors of products, etc. The melting point can be measured according to ISO 3146 regulation (plastic transition temperature measuring method, JIS K7121 format) using a differential scanning calorimeter (DSC). When a plurality of melting points exist, the melting point on the higher temperature side is used.

As the crystalline resin, a crystal-controlled crystalline thermoplastic resin is preferable. As the crystalline thermoplastic resin, for example, it can be obtained by a known method utilizing exterior stimuli such as heat treatment, drawing, crystal nuclear material, and ultrasonic wave treatment. Crystalline thermoplastic resins having controlled crystal size and crystalline orientation are preferable in terms that error occurring rate during recoating can be reduced.

The method of manufacturing the crystalline thermoplastic resin has no particular limit and can be suitably selected to suit to a particular application. For example, resin powder having a solid freeform fabrication is heated to the glass transition temperature or higher of each resin and thereafter subject to annealing to increase crystallinity or an addition of crystal nucleating agent to further increase crystallinity before the annealing. Also, it is suitable to use ultrasonic wave treatment or dissolve a resin in a solvent and slowly evaporate it to enhance crystallinity. Moreover, a method of applying an external electric field to grow crystal and a processing method of pulverizing and cutting an article having a high crystallization and orientation by further drawing are suitable.

In the annealing, for example, the resin is heated at a temperature 50 degrees higher than the glass transition temperature thereof for three days and thereafter slowly cooled down to room temperature.

For the drawing, for example, using an extruder, melted resin is drawn in a fibrous form during stirring at temperatures 30 degrees C or greater higher than the melting point. To be specific, a melted resin is drawn to around 1/1 to around 1/10 to obtain a fiber. The form of the cross section of the fiber can be determined by the form of the nozzle orifice of the extruder. In the present disclosure, when the pillar-like form particle is significant cylindrical form, a nozzle orifice having a circular form is used. In the case of a polygonal cylindrical form, a nozzle orifice having a polygonal form is used. Productivity is expected to increase in proportion to the number of nozzles. Regarding the drawing, the maximum drawing ratio can be changed depending on resin and melt viscosity.

For the application of ultrasonic wave, for example, glycerin (reagent grade, manufactured by Tokyo Chemical Industry Co. Ltd.) solvent is added to a resin in an amount of five times as much as the resin followed by heating to the temperature 20 degrees C higher than the melting point. Thereafter, ultrasonic wave is applied thereto by an ultrasonic generator (ultrasonicator UP200S, manufactured by Hielscher Ultrasonics GmbH) at a frequency of 24 KHz and an amplitude of 60 percent for two hours. Thereafter, the resultant is rinsed with a solvent of isopropanol at room temperature preferably followed by vacuum drying.

As the external electric field application, for example, after heating a resin powder for solid freeform fabrication at the glass transition temperature or higher, an alternative electric field (500 Hz) of 600 V/cm is applied to the resin powder for one hour, followed by slow cooling down.

In the powder bed fusion (PBF) method, a large temperature difference (temperature window) about crystal layer change is preferable to prevent warp, thereby enhancing fabrication stability. To obtain this large temperature difference, it is preferable to use a resin powder for solid freeform fabrication having a larger difference between the melt-starting temperature and the recrystallization temperature during cooling. Using the crystalline thermoplastic resin mentioned above is more preferable.

The crystalline thermoplastic resin can be determined by whether at least one of the following relations (conditions) (1) to (3) is satisfied.

(1): Tmfl > Tmf2, where Tmfl represents a melting starting temperature of an endothermic peak as the resin powder is heated to a temperature 30 degrees C higher than a melting point of the resin powder at a temperature rising speed of 10 degrees C per minute and Tmf2 represents a melting starting temperature of an endothermic peak as the resin powder is heated to a temperature 30 degrees C higher than the melting point of the resin powder at a temperature rising speed of 10 degrees C per minute, cooled down to -30 degrees C or lower at a temperature falling speed of 10 degrees C per minute, and heated to the temperature 30 degrees C higher than the melting point at a temperature rising speed of 10 degrees C per minute for a second time, and both Tmfl and Tmf2 are measured in differential scanning calorimetry measuring according to ISO 3146 regulation. The melting starting temperature of the endothermic peak represents a temperature at a point -15 mW lower from a straight line drawn parallel to X axis from a site where quantity of heat becomes constant after endotherm at the melting point is finished to a lower temperature side.

(2): Cd1 > Cd2, where Cd1 represents a crystallinity obtained from an energy amount of the endothermic peak when the resin powder is heated to a temperature 30 degrees C higher than the melting point of the resin powder at a temperature rising speed of 10 degrees C per minute for a first time and Cd2 represents a crystallinity obtained from an energy amount of the endothermic peak as the resin powder is heated for the first time, cooled down to -30 degrees C or lower at a temperature falling speed of 10 degrees C per minute, and heated to the temperature 30 degrees C higher than the melting point at a temperature rising speed of 10 degrees C per minute for a second time, and both Cd1 and Cd2 are measured in differential scanning calorimetry measuring according to ISO 3146 regulation.

(3): C x 1 > C x 2, where C x 1 represents a crystallinity of the resin powder obtained by X-ray diffraction measuring and C x 2 represents a crystallinity obtained by X-ray diffraction measuring as the resin powder is heated to the temperature 30 degrees C higher than the melting point thereof at a temperature rising speed of 10 degrees C per minute, cooled down to -30 degrees C or lower at a temperature falling speed of 10 degrees C per minute, and thereafter heated to the temperature 30 degrees C higher than the melting point at a temperature rising speed of 10 degrees C per minute in nitrogen atmosphere.

In the relations (1) to (3), properties of the identical resin powder for solid freeform fabrication are regulated from different points of views. The relations (1) to (3) are relevant to each other. Whether a resin powder for solid freeform fabrication of the present disclosure can be determined as a crystalline thermoplastic resin depends on whether the resin powder for solid freeform fabrication satisfies at least one of the relations (1) to (3). The relations (1) to (3) can be measured by the following method:

Measuring Method of Melting Starting Point of Condition 1 According To Differential Scanning Calorimetry Measuring

The measuring method of melting starting temperature of differential scanning calorimetry (DSC) of the condition (1) is based on the measuring method of ISO 3146 regulation (plastic transition temperature measuring method, JIS K7121 format). A differential scanning calorimeter (for example, DSC-60A, manufactured by Shimadzu Corporation) is used to measure the melting starting temperature (Tmfl) of the endothermic peak when the resin powder is heated to the temperature 30 degrees C higher than the melting point thereof at a temperature rising speed of 10 degrees C per minute. Thereafter, the resin powder is cooled down to -30 degrees C or lower at a temperature falling speed of 10 degrees C per minute and heated to the temperature 30 degrees C higher than the melting point at a temperature rising speed of 10 degrees C per minute to measure the melting starting temperature (Tmf2) of the endothermic peak. The melting starting temperature of the endothermic peak represents a temperature at a point -15 mW lower from a straight line drawn parallel to X axis from a site where quantity of heat becomes constant after endotherm at the melting point is finished to a lower temperature side.

Measuring Method of Crystallinity of Condition 2 According To Differential Scanning Calorimetry Measuring

The measuring method of crystallinity of differential scanning calorimetry (DSC) of the condition (2) is based on the measuring method according to ISO 3146 regulation (plastic transition temperature measuring method, JIS K7121 format). The energy amount (heat amount of melting) of an endothermic peak when heated to the temperature 30 degrees C higher than the melting point of powder resin at a temperature rising speed of 10 degrees C per minute is measured to obtain crystallinity (Cd1) from the heat amount of melting to the heat amount of complete crystallization. Thereafter, the resin powder is cooled down to -30 degrees C or lower at a temperature falling speed of 10 degrees C per minute and heated to the temperature 30 degrees C higher than the melting point at a temperature rising speed of 10 degrees C per minute to measure the energy amount of the endothermic peak so that crystallinity (Cd2) can be obtained as the ratio of the heat amount of melting to the heat amount of complete crystallization.

Measuring Method of Crystallinity of Condition 3 Using X-ray Analyzer

Crystallinity of resin powder of the condition 3 is obtained by placing the resin powder on glass plate to measure crystallinity (C x 1) thereof by an X-ray analyzer (for example, Discover 8, manufactured by Bruker) including a two-dimensional detector at a $2\theta$ range of from 10 to 40 at room temperature. Next, in the DSC, in a nitrogen atmosphere, the resin is heated to 30 degrees C higher than the melting point thereof at a temperature rising speed of 10 degrees C per minute. The temperature is maintained for 10 minutes and the temperature of the sample (resin powder) is back to room temperature by cooled down to -30 degrees C at a temperature falling speed of 10 degrees C per minute. Crystallinity (C x 2) can be measured as in the case of C × 1.

The thermoplastic resin for use in the resin powder for solid freeform fabrication has no particular limit and can be suitably selected to suit to a particular application.

Specific examples include, but are not limited to, polymers such as polyolefin, polyamide, polyester, polyther, polyarylketone, a liquid crystal polymer (LCP), polyacetal (POM), polyimide, and a fluorochemical resin. These can be used alone or in combination.

Specific examples of the polyolefine include, but are not limited to, polyethylene and polypropylene. These can be used alone or in combination.

Specific examples of the polyamide include, but are not limited to, polyamide 410 (PA410), polyamide 6 (PA6), polyamide 66 (PA66, melting point: 265 degrees C), polyamide 610 (PA610), polyamide 612 (PA612), polyamide 11 (PA11), polyamide 12 (PA12), semi-aromatic polyamide 4T (PA4T), polyamide MXD6 (PAMXD6), polyamide 6T (PA6T), polyamide 9T (PA9T), and polyamide 10T (PA10T). These can be used alone or in combination. PA9T is also referred to as polynonamethylene terephthal amide, constituted of a diamine having 9 carbon atoms and a terephthalic acid monomer. In general, since carbon acid side is an aromatic series, PA9T is referred to as semi-aromatic series. Moreover, the polyamide includes aramid, constituted of p-phenylenediamine and a terephathalic acid monomer as aromatic series in which diamine side is also aromatic.

Specific examples of the polyester include, but are not limited to, polyethyleneterephthalate (PET), polybutadiens terephthalate (PBT), and polylactic acid (PLA). To impart heat resistance, polyester including aromatic series partially including terephthalic acid and isophthalic acid is also suitably used.

Specific examples of polyether include, but are not limited to, polyether etherketone (PEEK), polyetherketone (PEK), polyether ketone ketone (PEKK), polyaryl ether ketone (PAEK), polyether ether ketone ketone (PEEKK), and polyetherkeone ether ketone ketone (PEKEKK).

In addition to the polyether mentioned above, crystalline polymers are also suitable. Specific examples include, but are not limited to, polyacetal, polyimide, and polyether sulfone. It is also suitable to use polyamide having two melting peaks such as PA9T (it is necessary to raise the temperature of a resin to the second melting peak or higher to completely melt the resin).

It is preferable that the resin powder for solid freeform fabrication be constituted of only pillar-like form particles. However, the resin powder may contain particles other than the pillar-like form particles. The proportion of the pillar-like form particle is preferably 50 percent or more, more preferably 75 percent or more, and 90 percent or more to the total of the resin powder for solid freeform fabrication. When the proportion of the pillar-like form particle is 50 percent or more, packing density can be significantly increased, which is extremely effective to enhance the dimension accuracy and the strength of an obtained solid freeform fabrication object. The proportion of the pillar-like form particle can be obtained by, for example, collecting resin powder for solid freeform fabrication, observing it with scanning electron microscope (SEM), and counting the number of pillar-like form particles to the number of all the particles of the obtained SEM images.

The resin powder for solid freeform fabrication may contain resin powder containing non-crystalline resin and an additive such as a fluidizer, a toughening agent, a flame retardant, an antioxidant, a plasticizer, a stabilizer, and a crystal nucleating agent other than the thermoplastic resin mentioned above. These can be used alone or in combination. These can be mixed with the thermoplastic resin to be present in the resin powder for solid freeform fabrication or can be attached to the surface thereof.

It is particularly preferable that the resin powder for solid freeform fabrication contain a fluidizer, a toughening agent, a flame retardant, and an antioxidant.

A fluidizer is preferably present on the surface of the resin powder for solid freeform fabrication. More preferably, it is attached to the surface.

The fluidizer partially or entirely covers the surface of the resin powder for solid freeform fabrication to improve flowability of the resin powder for solid freeform fabrication. If flowability of the resin powder for solid freeform fabrication increases, surface smoothness of the powder layer during recoating increases. In addition, voids in the resin powder for solid freeform fabrication are reduced, which makes it possible to further improve surface property, dimension accuracy, and strength of a solid freeform fabrication object. It is preferable that such a fluidizer cover the surface of the resin powder. However, some of them may be contained therein.

The average primary particle diameter of the fluidizer is preferably 500 nm or less and more preferably 50 nm or less. When the average primary particle diameter is 500 nm or less, the covering ratio of the surface of the resin powder by fluidizer can be increased so that voids can be reduced in addition to the enhancement of flowability. The average primary particle diameter can be measured by, for example, a particle size measuring system (ELSZ-2000ZS, manufactured by OTSUKA ELECTRONICS Co., LTD.).

There is no specific limit to the fluidizer and it can be suitably selected to suit to a particular application. For example, spherical inorganic particles are preferable. Specific examples of the fluidizer commonly used include, but are not limited to, silica, alumina, titania, zinc oxide, magnesium oxide, tin oxide, iron oxide, copper oxide, hydrated silica, silica having a surface modified by silane coupling agent, and magnesium silicate. In particular, in terms of effect, silica, titania, hydrated silica, and silica having a surface modified by silane coupling agent are preferable. In terms of cost, silica having a surface modified by a silane coupling agent to have hydrophobicity is particularly preferable. These can be used alone or in combination.

The fluidizer having a hydrophobized surface is preferably used.

There is no specific limit to the hydrophobizing method and known methods can be suitably selected.

Specific examples of the hydrophobizing agent include, but are not limited to, silane coupling agents such as hexamethyl disilazane (HMDS) and dimethyldichlorosilane (DMDS) and silicone oil treating agents such as dimethyl silicone oil and amino-modified silicone oil. Of these, silane coupling agents are preferable.

The processing amount of the hydrophobizing agent is preferably from 2 to 6 mg/m$^2$ per surface area of a particle.

The proportion of the fluidizer is preferably from 0.05 to 3 percent by mass and more preferably from 0.1 to 1.5 percent by mass to the total of the resin powder for solid freeform fabrication. When the proportion is within the range specified above, flowability of the resin powder for solid freeform fabrication can be improved and at the same time the impact of reduction of filling density ascribable to an increase of voids can be minimized, which is preferable.

A known powder mixer is used in the mixing and coating processes of the fluidizer with the resin powder for solid freeform fabrication. A mixer equipped with a jacket, etc. is preferably used to control the temperature of the inside. In addition, it is possible to arbitrarily change the number of rotation, speed, time, temperatures, etc. of the powder mixer.

Specific examples of the powder mixer include, but are not limited to, V-type mixers, Henschel Mixer, Rocking mixers, Nautor mixers, and Super mixers.

Toughening agents are added to mainly enhance the strength and contained as a filler. For example, fibers and beads are preferably used. The toughening agent has no particular limit and can be suitably selected to suit to a particular application. For example, glass filler, glass beads, carbon fiber, metal fiber, metal beads, aluminum balls, and articles listed in the pamphlet of WO 2008/057844 can be used. These can be used alone or in combination and may be contained in a resin.

It is preferable to use suitably-dried resin powder as the resin powder for solid freeform fabrication. Using a vacuum drier or silica gel is suitable to dry the resin powder before usage.

In general, accuracy of a fabricated object tends to deteriorate if the fiber filler or bead filler mentioned above is mixed with resin powder for solid freeform fabrication having no sharp melting property. This is because, since heat conductivity of the fiber filler or bead filler to be added is higher than that of the resin powder for solid freeform fabrication, heat applied to the irradiated sites diffuses outside the irradiated sites when the powder surface is irradiated with laser beams during SLS fabrication, so that the temperature of the resin powder outside the irradiation surpasses the melting point, which leads to excessive fabrication.

Conversely, powder mixture of the resin powder for solid freeform fabrication of the present disclosure (which is the crystalline thermoplastic resin composition having sharp melting property) and the fiber filler or bead filler is not easily melted even when the resin temperature outside laser irradiation rises due to heat diffusion because the resin powder has sharp melting property. Therefore, excessive fabrication can be prevented and high fabrication accuracy can be maintained.

The fiber filler preferably has an average fiber diameter of from 1 to 30 μm and an average fiber length of from 30 to 500 μm. When a fiber filler having an average fiber diameter or an average fiber length in such a range is used, strength of a fabricated object is improved and surface roughness of the fabricated object can be maintained on the same level as with a fabricated object having no fiber filler.

The bead filler preferably has a circularity of from 0.8 to 1.0 and a volume average particle diameter of from 10 to 200 μm. The circularity is obtained by the following relation, where S represents an area (number of pixels) and L represents a perimeter.

$$\text{Circularity} = 4\pi S/L^2$$

The volume average particle diameter can be measured by using a particle size distribution measuring instrument (Microtrac MT3300EXII, manufactured by MicrotracBEL Corp.).

The proportion of the toughening agent is preferably from 5 to 60 percent by mass to the total content of the resin powder for solid freeform fabrication. When the proportion is 5 percent by mass or greater, strength of a fabricated object is enhanced. When the proportion is 60 percent by mass or less, defective fabrication can be prevented.

Flame retardants are suitably used for, for example, material for building, vehicle, ship outfitting, etc., which require fire defense.

Examples are, halogen-based, phosphorine-based, inorganic hydrated metal compound-based, nitrogen-containing, silicone-containing retardants. These can be used alone or in combination. If two or more flame retardants are used in combination, the combination of halogen-based and inorganic hydrated metal compound-based retardants is preferable to improve flame retardancy.

Flame retardancy can be enhanced by adding inorganic toughening agents such as inorganic fibrous materials such as glass fiber, carbon fiber, aramid fiber and inorganic laminate silicate such as talc, mica, and montmorillonite. Inclusion of such material makes it possible to meet the balance between enhancing property and flame retardancy.

Flame retardancy of the resin powder for the solid freeform fabrication can be evaluated by, for example, JIS K6911 format, JIS L1091 (ISO 6925 regulation) format, JIS C3005 format, and pyrogen test (using a cone calorimeter).

The proportion of the flame retardant is preferably from 1 to 50 percent by mass to the total of the resin powder for solid freeform fabrication and more preferably from 10 to 30 percent by mass to furthermore improve flame retardancy. When the proportion is 1 percent by mass or more, flame retardancy is sufficiently secured. In addition, when the proportion is 50 percent by mass or less, melt-solidification property of the resin powder for solid freeform fabrication does not easily change and it is possible to prevent deterioration of fabrication accuracy and properties.

In addition, to reduce deterioration of a resin, it is possible and suitable to contain an antioxidant (including an anti-deterioration agent or a stabilizer).

Specific examples of the antioxidant include, but are not limited to, metal inactivators such as hydrazide-based agents and amide-based agents, radical scavengers such as phenol-based (hindered phenol-based) agents and amino-based agents, peroxide decomposers such as phosphate-based agents and sulfur-based agents, and ultraviolet absorbents such as triadine-based agents. These can be used alone or in combination. In particular, the combinational use of a radical scavenger and a peroxide decomposer is known to be effective, and particularly effective in the present disclosure.

The proportion of antioxidant is preferably from 0.05 to 5 percent by mass, more preferably from 0.1 to 3 percent by mass, and furthermore preferably from 0.2 to 2 percent by mass to the total of the resin powder for solid freeform fabrication. When the proportion is within the range specified above, heat deterioration can be prevented and resin powder used for fabrication can be reused.

In addition, color change due to heat can be prevented.

In addition, the resin powder for solid freeform fabrication can be used in the SLS method or SMS method and has properties striking a balance between parameters such as particle size, particle size distribution, heat transfer properties, melt viscosity, bulk density, flowability, melting temperature, and recrystallization temperature.

To promote the degree of laser sintering in the PBF method, the bulk density of the resin powder for solid freeform fabrication is preferably large although the density of the resin varies. For example, the tap density is preferably 0.35 g/mL or greater, more preferably 0.40 g/mL or greater, and particularly preferably 0.5 g/mL or greater.

A fabricated object formed by laser sintering using the resin powder for solid freeform fabrication is smooth and has a surface having a resolution sufficient to demonstrate minimum orange peel or less. The orange peel means surface deficiency such as unsuitable coarse surface or voids or warp on the surface of a fabricated object formed by laser sintering in the PBF method in general. Voids may have significant adverse impacts on mechanical strength as well as aesthetic aspects.

Furthermore, it is preferable that solid freeform fabrication objects formed by laser sintering using the resin powder for solid freeform fabrication be free of unsuitable process properties such as warp, distortion, and fuming caused by phase changes between sintering and cooling after sintering.

It is possible to obtain a solid freeform fabrication object having an excellent dimension accuracy, strength, and surface property (orange peel). Moreover, since recyclability is good, it is possible to reduce deterioration of dimension accuracy and strength of a solid freeform fabrication object for repeated use of extra powder.

For the recycled powder for use in the present disclosure, a dog-bone-like test specimen for multiple purpose having a length of 150 mm free of unsuitable process properties can be manufactured by a manufacturing device (AM S5500P, manufactured by Ricoh Company Ltd.) employing PBF method after the recycled powder is tested at least once, preferably five times, more preferably seven times, and particularly preferably at least ten times in accordance with ISO 3167 Type 1A regulation.

Method of Manufacturing Pillar-like Form Particle

To obtain the pillar-like form particle, it is possible to utilize any method of manufacturing the resin particle for solid freeform fabrication of the present disclosure. For example, the resin particle for solid freeform fabrication can be manufactured by a method of preparing fiber of a resin followed by cutting to directly obtain a significantly cylindrical form or a polygonal cylindrical form. In another method, similarly pillar-like form particles are obtained from a film form. Also, resin particles having a significantly cylindrical form can be manufactured by subjecting obtained polygonal cylindrical form particles to post processing.

How to prepare fiber is, for example, using an extruder, drawing a melted resin in a fibrous form during stirring at temperatures 30 degrees C or greater higher than the melting point. It is preferable to draw the melted resin to about 1/1 to about 1/10 to obtain the fiber. The form of the base of the pillar-like form particle is determined by the form of the nozzle orifice of an extruder. For example, if the form of the base, i.e., the cross section of fiber, is circular, a nozzle having a circular orifice is used. For a polygonal cylindrical form, the nozzle orifice is selected in accordance with the form. It is preferable that the dimension accuracy of a solid freeform fabrication object be higher. The circular form of a plane portion is at least 10 percent or less at radius. In addition, it is preferable to have more nozzle orifices to enhance productivity.

For the cutting, a cutting machine employing a guillotine method in which both the upper edge and the lower edge are blades or a cutting machine employing a straw cutter method of cutting with an upper edge with not a blade but a board disposed on the bottom side can be used. It is also preferable to use a known device which directly cuts the fiber to 0.005 to 0.2 mm or a $CO_2$ laser to cut the fiber, etc. Utilizing such a method, the resin powder containing the pillar-like form particle of the present disclosure can be obtained.

It is also suitable to use a method of pulverizing a resin pellet. For example, resin having a form of pellet, etc., is mechanically pulverized using a known pulverizer and thereafter the thus-obtained resin powder is classified to obtain resin having a particle diameter outside the target. The pulverization temperature is preferably 0 degrees C or lower (brittle temperature or lower of each resin), more preferably -25 degrees C or lower, and particularly preferably -100 degrees C or lower.

Method of Manufacturing Solid Freeform Fabrication Object and Device for Manufacturing Solid Freeform Fabrication Object

The method of manufacturing a solid freeform fabrication object includes a layer forming process to form a layer containing the resin powder for solid freeform fabrication of the present disclosure and a powder adhesion process to cause the resin powder for solid freeform fabrication to adhere to each other in a selected area of the layer, and repeating the layer forming process and the powder adhesion process, and may furthermore optionally include other processes.

The device for manufacturing a solid freeform fabrication object includes a layer forming device to form a layer containing the resin powder for solid freeform fabrication object of the present disclosure and a powder adhesion device to cause the resin powder to adhere to each other in a selected area of the layer and may furthermore optionally include other devices.

The method of manufacturing a solid freeform fabrication object can be suitably executed by the device for manufacturing a solid freeform fabrication object. As the resin powder for solid freefrom fabrication, it is possible to use the same resin powder for solid freeform fabrication of the present disclosure.

The resin powder for solid freeform fabrication can be used for any of the device for manufacturing a solid freeform fabrication object employing a powder additive manufacturing method. The device for manufacturing a solid freeform fabrication object executing a powder additive manufacturing method forms a powder layer and thereafter causes resin powder in a selected area to adhere to each other with a different device depending on methods. For example, there are an electromagnetic device (irradiator to emit electromagnetic wave) employing SLS method or SMS method and a liquid discharging device employing a binder jetting method. The resin powder for solid freeform fabrication of the present disclosure can be applicable to any of those and every device for solid freeform fabrication including a device for powder additive manufacturing.

For the device for manufacturing a solid freeform fabrication object employing SLS method or SMS method utilizing the electromagnetic wave irradiation, as the electromagnetic wave irradiation source for use in electromagnetic irradiation, for example, it is possible to use laser that emits ultraviolet rays, visible light, infrared rays, etc., microwave, discharging, electron beams, a radiant heater, an LED lamp, or a combination thereof.

In addition, for the method of causing the resin powder for solid freeform fabrication to selectively adhere to each other utilizing electromagnetic wave irradiation, absorption of electromgnetic wave can be changed in terms of efficiency. For example, it is possible to cause the resin powder for solid freeform fabrication to contain an absorbent or retarder.

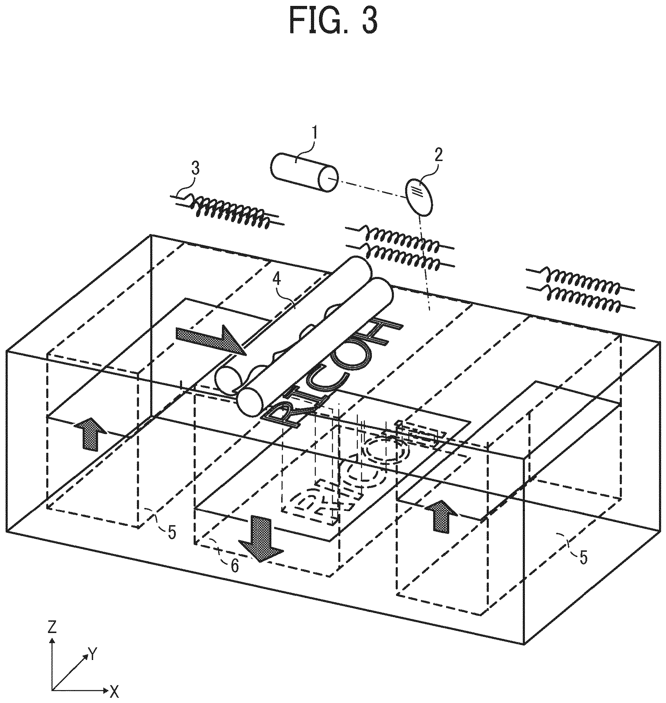

An example of the device for manufacturing a solid freeform fabrication object is described referring to FIG. 3. FIG. 3 is a schematic diagram illustrating an example of the device for manufacturing a solid freeform fabrication object according to an embodiment of the present invention. As illustrated in FIG. 3, powder is stored in a supplying tank 5 for powder and supplied to a laser beam scanning space 6 using a roller 4 in proportion to the usage amount. It is preferable that the temperature of the supply tank 5 be controlled by a heater 3. The laser scanning space 6 is irradiated with the laser beams emitted from an electromagnetic wave irradiation source 1 using a reflection mirror 2. The powder is sintered with the heat of the laser beams to obtain a solid freeform fabrication object.

The temperature of the supply tank 5 is preferably 10 degrees C or more lower than the melting point of the powder.

The temperature of the part bed in the laser scanning space 6 is preferably 5 degrees C or more lower than the melting point of the powder.

The power of the laser has no particular limit and can be suitably selected to suit to a particular application. For example, it is preferably from 10 to 150 W.

In another embodiment, solid freeform fabrication objects in the present disclosure can be manufactured using selective mask sintering (SMS) technologies. The SMS process is described in, for example, the specification of US Patent No. 6,531,086.

In the SMS process, powder layers are partially and selectively irradiated with infra red, which is selectively shielded by using a shielding mask. When utilizing the SMS process to manufacture a solid freeform fabrication object from the resin powder for solid freeform fabrication of the present disclosure, it is possible and preferable to contain material to enhance infrared absorption of the resin powder for solid freeform fabrication. For example, the resin powder may contain at least one kind of heat absorbent and/or dark color material (such as carbon fiber, carbon black, carbon nanotube, and cellulose nanofiber).

In yet another embodiment, using the resin powder for solid freeform fabrication of the present disclosure, a solid freeform fabrication object can be manufactured by the device for solid freeform fabrication employing binder jetting mentioned above. This method of manufacturing a solid freeform fabrication object includes a layer forming process to form a layer containing the resin powder for solid freeform fabrication of the present disclosure and a powder adhesion process to cause the resin powder for solid freeform fabrication to adhere to each other in a selected area of the layer, and repeating the layer forming process and the powder adhesion process, and may furthermore optionally include other processes.

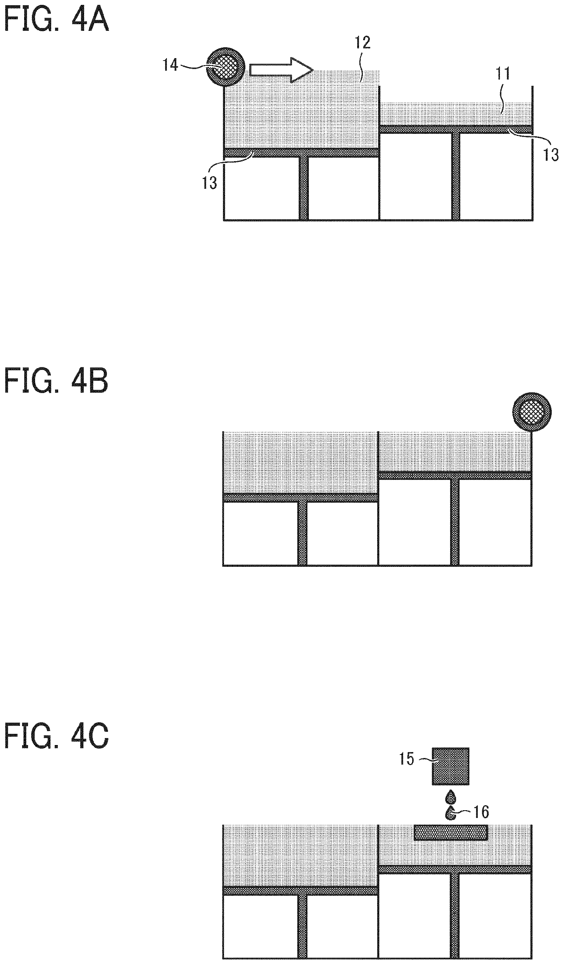

FIGS. 4A to 4F are schematic process diagrams illustrating an example of the process of the binder jetting method. The device for manufacturing a solid freeform fabrication object illustrated in FIGS. 4A to 4F includes a powder storage tank 11 for fabrication and a powder storage tank 12 for supplying. Each of these powder storage tanks 11 and 12 has a stage 13 movable up and down and places the resin powder for solid freeform fabrication of the present disclosure on the stage 13 to form a layer formed of the resin powder for solid freeform fabrication.

A fabrication liquid supplying device 15 is disposed over the powder storage tank 11 for fabrication to discharge a liquid material 16 for solid freeform fabrication toward the resin powder for solid freeform fabrication in the powder storage tank. Furthermore, the device for manufacturing a solid freeform fabrication includes a resin powder layer forming device 14 (hereinafter also referred to as recoater) capable of supplying the resin powder for solid freeform fabrication from the powder storage tank 12 for supplying to the powder storage tank 11 for fabrication and smoothing the surface of the resin powder layer in the powder storage tank 11 for fabrication.

FIGS. 4A and 4B are diagrams illustrating an example of the step of supplying the powder material for solid freeform fabrication from the powder storage tank 12 for supplying to the powder storage tank 11 for fabrication and the step of forming the powder material layer having a smooth surface. Each stage 13 of the powder storage tank 11 for fabrication and the powder storage tank 12 for supplying is controlled to adjust the gap therebetween to obtain a desired layer thickness. Thereafter, the resin powder layer forming device 14 is moved from the powder storage tank 12 for supplying to the powder storage tank 11 for fabrication to form a resin powder layer in the powder storage tank 11 for fabrication.

FIG. 4C is a schematic diagram illustrating an example of the process of dripping the liquid material 16 for solid freeform fabrication to the powder layer in the powder storage tank 11 for fabrication by using the fabrication liquid supplying device 15 for solid freeform fabrication. At this point, the position where the liquid material 16 for solid freeform fabrication is dripped onto the powder layer is determined based on two-dimensional image data (slice data) obtained by slicing the solid freeform fabrication object into multiple plane layers.

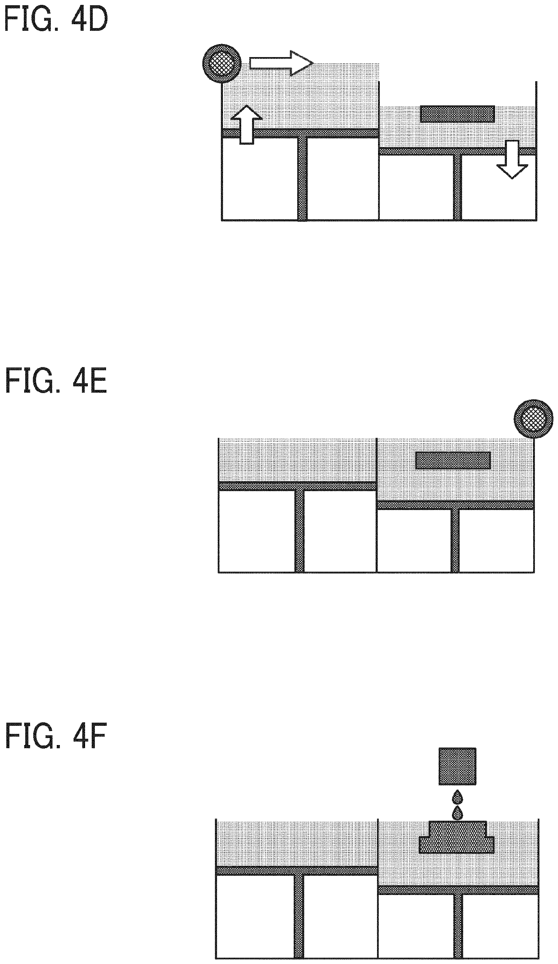

FIGS. 4D and 4E are schematic diagrams illustrating an example of the step of newly forming another resin powder layer in the powder storage tank 11 for solid freeform fabrication, in which the stage 13 of the powder storage tank 12 for supplying is elevated and the stage 13 of the powder storage tank 11 for fabrication is lowered while controlling the gap therebetween to obtain a desired layer thickness, and thereafter, the resin powder layer forming device 14 is moved again from the powder storage tank 12 for supplying to the powder storage tank 11 for fabrication.

FIG. 4F is a schematic diagram illustrating an example of the process of dripping the liquid material 16 for solid freeform fabrication again onto the resin powder layer in the powder storage tank 11 for fabrication by using the fabrication liquid supplying device 15. This series of processes is repeated. Subsequent to optional drying, the resin powder to which no liquid material for solid freeform fabrication is attached is removed as extra powder to obtain a solid freeform fabrication object.

It is preferable to contain an adhesive to cause the resin powder for solid freeform fabrication to adhere to each other. The adhesive can be dissolved in liquid to be discharged. Alternatively, the adhesive can be mixed with the resin powder for solid freeform fabrication as an additive particle. The adhesive is preferably dissolved in liquid to be discharged. For example, the adhesive is preferably water-soluble if the liquid is mainly composed of water.

Examples of the water-soluble adhesive are polyvinyl alcohol (PVA), polyvinyl pyrrolidone, polyamide, polyacrylic amide, polyethylene imine, polyethylene oxides, polyacrylate resins, cellulose resins, and gelatin. Of these, polyvinyl alcohol is preferable to enhance the strength and the dimension accuracy of a solid freeform fabrication object.

The resin powder for solid freeform fabrication has high packing density and a sharp particle size distribution, thereby the dimension accuracy, strength, and surface property of a thus-obtained solid freeform fabrication object. This is not limited to the method utilizing electromagnetic irradiation but can be applied to all the devices for solid freeform fabrication employing powder additive manufacturing such as the binder jetting method.

Solid Freeform Fabrication Object

The solid freeform fabrication object can be suitably manufactured by the device for manufacturing a solid freeform fabrication object of the present disclosure using the resin powder for solid freeform fabrication of the present disclosure.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, embodiments of the present disclosure are described in detail with reference to Examples but not limited thereto.

Average circularity, specific gravity, tap density, particle diameter ratio (volume average particle diameter/number average particle diameter), and ratio of pillar-like form particle having no point at ends) were measured in the following manner: The results are shown in Tables 1 and 2.

Average Circularity

Using a wet-process flow type particle size and form analyzer (FPIA-3000, manufactured by Sysmex Corporation), particle form images were taken in a state where the counting number of powder particles was 3,000 or more to obtain the average circularity of the pillar-like form resin particle in the particle diameter range of from 0.5 to 200 μm. The circularity was measured twice for each and the average of the two was determined as the average circularity.

Specific Gravity

The specific gravity was obtained by measuring the density of a sample. The density was obtained by measuring the mass of the sample from the volume thereof. The volume was obtained by changing volume and pressure of gas (He gas) at a constant temperature by using a dry-process pycnometer (AccuPyc 1330, manufactured by Shimadzu Corporation) utilizing gas-phase replacement method.

Tap Density

The tap density was evaluated according to the method based on ISO 1068 regulation. 100 g of a sample was placed in a 250mL glass measuring cylinder (manufactured by SIBATA SCIENTIFIC TECHNOLOGY LTD.) without tapping and thereafter the measuring cylinder was mounted onto a tapping tool. The device was stopped after tapping 1,300 times to read the volume of the sample. Moreover, the sample was tapped another 1,300 times. This was repeated until the difference of the two did not surpass 2 mL, the smaller volume was read. The weighed mass of the sample was divided by the volume value to obtain the tap density.

## Particle Diameter Ratio (Volume Average Particle Diameter Mv / Number Average Particle Diameter Mn)

The volume average particle diameter Mv and the number average particle diameter Mn were measured using a particle size distribution measuring instrument (Microtrac MT3300EXII, manufactured by MicrotracBEL Corp.) employing a drying process (atmosphere) method without using a solvent, utilizing particle refractive index per resin powder for solid freeform fabrication, to calculate the volume particle diameter ratio (volume average particle diameter/number average particle diameter). The particle refractive index was set for polybutylene terephthalate (PBT) resin of 1.57, polyamide 66 (PA66) resin of 1.53, polyamide 9T (PA9T) resin of 1.53, polypropylene (PP) resin of 1.48, polyether ether ketone (PEEK) resin of 1.57, and polyacetal (POM) resin of 1.48.

Ratio of Pillar-like Form Particle Having No Point at End

The thus-obtained resin powder for solid freeform fabrication was observed with a scanning electron microscope (S4200, manufactured by Hitachi Ltd.), to obtain two-dimensional images in 10 vision fields, from which the ratio of the pillar-like form particle having no points at ends was obtained. The ratio of the pillar-like form particle having no points at ends in the resin powder for solid freeform fabrication of 75 percent or higher was determined as A and, less than 75 percent, B.

Example 1

0.3 percent by mass of phenol-based antioxidant (AO-60, manufactured by ADEKA CORPORATION) and 0.6 percent by mass of phosphate-based antioxidant (PEP-36, manufactured by ADEKA CORPORATION) were added to and stirred with 99.1 percent by mass of pellets of polybutylene terephthalate (PBT) resin (NOVADURAN® 5020, melting point: 218 degrees C, glass transition temperature: 43 degrees C, manufactured by Mitsubishi Engineering-Plastics Corporation). After being stirred at 30 degrees C higher than the melting point by using an extruder (manufactured by The Japan Steel Works, LTD.), the melted matter was drawn to obtain fiber using nozzles having a circular orifice. The number of fibers extruded from the nozzle was 100. The pellet was drawn to about four times to obtain a resin fiber having a fiber diameter of 60 $\mu$m with an accuracy of from -4 to +4 $\mu$m. The thus-obtained resin fiber was cut to a fiber length of 60 $\mu$m by a cutting device (NJ series 1200 type, manufactured by OGINO SEIKI CO., LTD.) employing straw cutting method to obtain resin powder containing resin particles having a significantly cylindrical form.

Using a scanning electron microscope (S4200, manufactured by Hitachi, Ltd.), the thus-obtained resin powder was observed to find out that most of the pillar-like form particles had a clean cut cross section and a cylindrical form having cut surfaces parallel to each other In addition, the height of the significantly cylindrical form was measured. The fiber was cut to 80 $\mu$m with an accuracy of from -10 to +10 $\mu$m. Using the scanning electron microscope, two dimensional images in 10 vision fields were obtained. The proportion of the particle having a significant cylindrical form to all the particles in each image was 92 percent on average. The reins powder slightly contained particles crushed during cutting, particles swelling like a barrel along the height direction against the base, and particles having a dented portion in contrast. The ratio of such particles to all the particles was 0.9 percent. In addition, the melting energy increased up to about twice due to crystal control by drawing. Under the first time heating condition of DSC, the melting starting time (Tmfl) was 219 degrees C. Under the second time heating condition, the melting starting temperature (Tmf2) was 210 degrees C.

Moreover, the obtained resin powder was subject to spheroidizing treatment. The resin powder was spherodized using a spheroidizing processing device (MP type mixer MP5A/1, manufactured by NIPPON COKE & ENGINEERING CO., LTD.) at a stirring speed of 9,600 rotation per minute (rpm) for 20 minutes to obtain resin powder for solid freeform fabrication. The obtained resin powder for solid freeform fabrication was defined as resin powder 1 for solid freeform fabrication. This resin powder 1 was observed using a scanning electron microscope (S4200, manufactured by Hitachi, Ltd.) to confirm that the points at ends of the particle were rounded. That is, the obtained pillar-like form particles had no points at ends. In addition, two dimensional images in 10 vision fields were similarly obtained. The ratio of the pillar-like form particle having no points at ends to all the pillar-like form particles for each image was 88 percent on average.

Example 2

The same resin as used in Example 1 was stirred at the temperature 30 degrees C higher than the melting point using the extruder (manufactured by The Japan Steel Works, LTD.). Thereafter, the resin was extruded from the nozzle and the thus obtained melted sheet was drawn to about 4 times using a T die (manufactured by The Japan Steel Works, LTD.) and brought into contact with a cooling roll for cooling and solidification. As a result, a film having a size of 1,000 mm × 1,000 mm with an average thickness of 80 $\mu$m was obtained. The thus-obtained film was cut by a cutting device (NJ series 1200 type, manufactured by OGINO SEIKI CO., LTD.) employing the straw cutting method. The film was cut to have a thickness of 80 $\mu$m and a width of 80 $\mu$m. Thereafter, the film was rotated 90 degrees and cut to have a thickness of 80 $\mu$m and a width of 80 $\mu$m to obtain a resin powder having a cubic form with a side of 80 $\mu$m. During the cutting, the particle was suctioned by a suction machine to prevent double cutting. After the cutting, the cross section was observed by a scanning electron microscope. The particles were cleanly cut and the cross sections thereof were parallel to each other. Also, almost no double-cut particles were observed. In addition, each side of the cube was measured. The side was 80 $\mu$m with an accuracy of from -10 to +10 $\mu$m. No particles were crushed at the cutting. The ratio of the particle having a polygonal cylindrical form (cube) to all the particles was similarly obtained. It was 96 percent on average.

Moreover, the obtained resin powder was subject to spheroidizing treatment. The resin powder was spheroidized in the same manner as in Example 1. The obtained resin powder for solid freeform fabrication was defined as resin powder 2 for solid freeform fabrication. This resin powder 2 was observed using the scanning electron microscope to confirm that points at ends of the particle were rounded. That is, particles having no points at ends were obtained. In addition, the ratio of the pillar-like form particle having no points at ends to all the pillar-like form particles for each image was similarly obtained. It was 83 percent on average.

Example 3

Resin powder was manufactured in the same manner as in Example 1 except that polybutylene terephthalate (PBT) resin was changed to polyamide 66 (PA66) (Leona™ 1300 S, melting point of 265 degrees C, manufactured by Asahi Kasei Chemicals Corporation), and the antioxidant was changed only to 0.2 percent by mass phosphate-based antioxidant (PEP-36, manufactured by ADEKA CORPORATION).

The thus-obtained resin powder was subject to the spheroidizing treatment in the same manner as in Example 1 to obtain a resin powder 3 for solid freeform fabrication. This resin powder 3 was observed using a scanning electron microscope to confirm that particles having a pillar-like form with no points at ends were obtained. In addition, the ratio of the pillar-like form particle having no points at ends to all the pillar-like form particles for each image was similarly obtained. It was 90 percent on average.

Example 4

After stirring polyamide 9T (PA9T) resin (Genestar™ N1000A, melting point: 300 degrees C, manufactured by KURARAY CO., LTD.) at the temperature 30 degrees C higher than the melting point using an extruder (manufactured by The Japan Steel Works, LTD.), the melted resin for solid freeform fabrication was drawn to obtain fiber using a nozzle having a circular orifice. The number of fibers extruded from the nozzle was 60. The resin was drawn to about 1.2 times to obtain a resin fiber having a fiber diameter of from 38 to 42 $\mu$m.

The thus-obtained resin fiber was cut to a fiber length of 40 $\mu$m by a cutting device (HP 600, manufactured by Tsuji Ironworks Corporation) employing straw cutting method to obtain resin powder containing resin particles having a significantly cylindrical form.

The thus-obtained resin powder was observed using a scanning electron microscope. The cross section of the resin powder was cleanly cut and the cutting surfaces were parallel to each other. In addition, the height of the significantly cylindrical form was measured. It was 40 $\mu$m with an accuracy of from -8 to +8 $\mu$m. No particles were crushed at the cutting.

The thus-obtained resin powder was subject to the spheroidizing treatment in the same manner as in Example 1 to obtain a resin powder 4 for solid freeform fabrication. Existence of pillar-like form particle with no points at ends was confirmed in the resin powder by a scanning electron microscope. In addition, the ratio of the pillar-like form particle having no points at ends to all the pillar-like form particles for each image was similarly obtained. It was 86 percent on average.

Example 5

Resin powder containing particles having a significantly cylindrical form was obtained in the same manner as in Example 1 except that polybutylene terephthalate (PBT) resin was changed to polypropylene (PP) resin (NOVATEC™ MA3, melting point: 180 degrees C, glass transition temperature: 0 degrees C, manufactured by JAPAN POLYPROPYLENE CORPORATION) and the fiber was cut to have a fiber length of 80 $\mu$m.

The thus-obtained resin powder was subject to the spheroidizing treatment in the same manner as in Example 1 to obtain a resin powder 5 for solid freeform fabrication. Existence of particles having pillar-like forms with no points at ends was confirmed in the resin powder with a scanning electron microscope. In addition, the ratio of the pillar-like form particle having no points at ends to all the pillar-like form particles for each image was similarly obtained. It was 84 percent on average.

Example 6

Resin powder containing particles having a significantly cylindrical form was obtained in the same manner as in Example 1 except that polybutylene terephthalate (PBT) resin was changed to polyetherether ketone (PEEK) resin (HT P22PF, melting point of 334 degrees C, glass transition temperature of 143 degrees C, manufactured by VICTREX) and the drawing rate was changed to three times and the fiber was cut to have a fiber length of 70 $\mu$m.

The thus-obtained resin powder was subject to the spheroidizing treatment in the same manner as in Example 1 to obtain a resin powder 6 for solid freeform fabrication. Existence of particles having pillar-like forms with no points at edges was confirmed in the resin powder with a scanning electron microscope. In addition, the ratio of the pillar-like form particle having no points at ends to all the pillar-like form particles for each image was similarly obtained. It was 77 percent on average.

Example 7

Resin powder containing particles having a significantly cylindrical form was obtained in the same manner as in Example 1 except that polybutylene terephthalate (PBT) resin was changed to polyacetal (POM) resin (Jupital® F10-01, melting point: 175 degrees C, manufactured by Mitsubishi Engineering-Plastics Corporation) and the fiber was cut to have a fiber length of 85 $\mu$m.

The thus-obtained resin powder was subject to the spheroidizing treatment in the same manner as in Example 1 to obtain a resin powder 7 for solid freeform fabrication. Existence of particles having pillar-like forms with no points at edges was confirmed in the resin powder with a scanning electron microscope. In addition, the ratio of the pillar-like form particle having no points at ends to all the pillar-like form particles for each image was similarly obtained. It was 80 percent on average.

Example 8

A resin powder 8 for solid freeform fabrication was manufactured in the same manner as in Example 1 except that the fiber diameter was changed to 80 $\mu$m and the fiber length was changed to 50 $\mu$m. This resin powder 8 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 85 percent on average.

Example (reference example, not according to the invention)

A resin powder 9 for solid freeform fabrication was manufactured in the same manner as in Example 1 except that no antioxidant was added and the spheroidizing time was changed to five minutes. This resin powder 9 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 73 percent on average.

Example 10

A resin powder 10 for solid freeform fabrication was manufactured in the same manner as in Example 1 except that no antioxidant was added and the spheroidizing time was changed to 120 minutes. This resin powder 10 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 96 percent on average.

Example 11

A resin powder 11 for solid freeform fabrication was manufactured in the same manner as in Example 1 except that the spheroidizing processing device was changed to a surface fusing system (rounding equipment, Meteorainbow MR-10, manufactured by Nippon Pneumatic Mfg. Co., Ltd.). This resin powder 11 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 80 percent on average.

Example 12

A resin powder 12 for solid freeform fabrication was manufactured in the same manner as in Example 1 except that, prior to spheroidizing treatment, 0.8 percent by mass of a fluidizer (AEROSIL RX200, surfactant: HMDS, average primary particle diameter of 12 nm, amount of charge of -200 $\mu$C/g, manufactured by Nippon Aerosil Co., Ltd.) was added to the resin powder 1 for solid freeform fabrication and, using a spheroidizing treatment device (MP type Mixer MP5A/1, manufactured by NIPPON COKE & ENGINEERING CO., LTD.), both were spherodized and mixed at the same time. The stirring speed was 9,600 rpm and stirring time was five minutes. This resin powder 12 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 77 percent on average.

Example 13

A resin powder 13 for solid freeform fabrication was manufactured in the same manner as in Example 12 except that the amount ratio of the fluidizer was changed to 0.2 percent by mass. This resin powder 13 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 80 percent on average.

Example 1 (reference example, not according to the invention)

A resin powder 14 for solid freeform fabrication was manufactured in the same manner as in Example 12 except that the amount ratio of the fluidizer was changed to 1.3 percent by mass. This resin powder 14 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 71 percent on average.

Example 15

A resin powder 15 for solid freeform fabrication was manufactured in the same manner as in Example 12 except that the fluidizer was changed to SFP-20MHH (surfactant: HMDS, average primary particle diameter of 400 nm, manufactured by Denka Company Limited). This resin powder 15 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 78 percent on average.

Example 16

A resin powder 16 for solid freeform fabrication was manufactured in the same manner as in Example 12 except that the fluidizer was changed to AEROXIDE T805 (surfactant: octyltrimethoxy silane, average primary particle diameter of 21 nm, manufactured by Nippon Aerosil Co., Ltd.). This resin powder 16 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 81 percent on average.

Example 17

A resin powder 17 for solid freeform fabrication was manufactured in the same manner as in Example 1 except that the resin was drawn to have a fiber form using a nozzle having a hexagonal orifice to obtain resin powder having hexagonal cylindrical form. This resin powder 17 was observed using a scanning electron microscope (S4200, manufactured by Hitachi, Ltd.) to confirm that points at ends of the particle were rounded. That is, particles having no points at ends were obtained. In addition, the ratio of the pillar-like form particle having no points at ends to all the pillar-like form particles for each image was similarly obtained. It was 85 percent on average.

Comparative Example 1

A polybutylene terephthalate (PBT) resin (NOVADURAN® 5020, melting point of 218 degrees C, glass transition temperature of 43 degrees C, manufactured by Mitsubishi Engineering-Plastics Corporation) was subject to frost shattering at -200 degrees C using a cold pulverization system (LINREX MILL LX1, manufactured by Hosokawa Micron Corporation) to obtain a resin powder 18 for solid freeform fabrication having a particle diameter of from 5 to 200 $\mu$m.
The thus-obtained resin powder for solid freeform fabrication was observed with a scanning electron microscope (S4200, manufactured by Hitachi, Ltd.). Particles having various forms such as ellipsoidal forms, bar-like forms, and plate-like forms were present. However, there was no pillar-like form particle.

Comparative Example 2

The resin powder of Comparative Example 1 was subject to spheroidizing treatment by a spheroidizing device (MP type mixer MP5A/1, manufactured by NIPPON COKE & ENGINEERING. CO., LTD.) at a stirring speed of 9,600 rpm for 20 minutes. The obtained resin powder was defined as resin powder 19 for solid freeform fabrication. This resin powder 19 was observed with a scanning electron microscope (S4200, manufactured by Hitachi, Ltd.). Particles having various forms such as ellipsoidal forms, bar-like forms, and plate-like forms were present. Overall, the particles were roundish. However, there was found no pillar-like form particle.

Comparative Example 3

A resin powder 20 for solid freeform fabrication was manufactured in the same manner as in Comparative Example 2 except that, prior to spheroidizing treatment, 0.8 percent by mass of a fluidizer (AEROSIL RX200, surfactant: HMDS, average primary particle diameter of 12 nm, manufactured by Nippon Aerosil Co., Ltd.) was added to the resin powder of Comparative Example 2 and, using a spheroidizing treatment device (MP type Mixer MP5A/1, manufactured by NIPPON COKE & ENGINEERING CO., LTD.), both were spherodeized and mixed at the same time. The stirring speed was 9,600 rpm and stirring time was five minutes.

This resin powder 19 was observed with a scanning electron microscope (S4200, manufactured by Hitachi, Ltd.). Particles having various forms such as ellipsoidal forms, bar-like forms, and plate-like forms were present. Overall, the particles were roundish. However, there was found no pillar-like form particle.

Comparative Example 4

A resin powder 21 for solid freeform fabrication was obtained in the same manner as in Comparative Example 1 except that polybutylene terephthalate (PBT) resin was changed to polyamide 66 (PA66) resin (Leona™ 1300S, melting point: 265 degrees C, manufactured by Asahi Kasei Chemicals Corporation).

The thus-obtained resin powder 21 was observed with a scanning electron microscope (S4200, manufactured by Hitachi, Ltd.). Particles having various forms such as ellipsoidal forms, bar-like forms, and plate-like forms were present. However, there was no pillar-like form particle.

Table (note that examples 9 and 14 are reference examples, not according to the invention)

| | Resin powder No. | Resin powder for solid freeform fabrication | | | | |
| --- | --- | --- | --- | --- | --- | --- |
| | | Resin | Pillar-like form | Fluidizer | Anti-oxidant | Average circularity |
| Example 1 | 1 | PBT | Significantly cylindrical form | - | AO-60 0.3 percent by mass PEP-36 0.6 percent by mass | 0.89 |
| Example 2 | 2 | PBT | Cube | - | AO-60 0.3 percent by mass PEP-36 0.6 percent by mass | 0.88 |
| Example 3 | 3 | PA66 | Significantly cylindrical form | - | PEP-36 0.2 percent by mass | 0.89 |
| Example 4 | 4 | PA9T | Significantly cylindrical form | - | - | 0.86 |
| Example 5 | 5 | PP | Significantly | - | - | 0.89 |

| | | | | | | |
|---|---|---|---|---|---|---|
| | | | cylindrical form | | | |
| Example 6 | 6 | PEEK | Significantly cylindrical form | - | - | 0.85 |
| Example 7 | 7 | POM | Significantly cylindrical form | - | AO-60 0.3 percent by mass PEP-36 0.6 percent by mass | 0.88 |
| Example 8 | 8 | PBT | Significantly cylindrical form | - | AO-60 0.3 percent by mass PEP-36 0.6 percent by mass | 0.89 |
| Example 9 | 9 | PBT | Significantly cylindrical form | - | - | 0.83 |
| Example 10 | 10 | PBT | Significantly cylindrical form | - | - | 0.94 |
| Example 11 | 11 | PBT | Significantly cylindrical form | - | AO-60 0.3 percent by mass PEP-36 0.6 percent by mass | 0.87 |
| Example 12 | 12 | PBT | Significantly cylindrical | RX200 0.8 | AO-60 0.3 | 0.89 |

| | | | | | | |
|---|---|---|---|---|---|---|
| | | | form | percent by mass | percent by mass PEP-36 0.6 percent by mass | |
| Example 13 | 13 | PBT | Significantly cylindrical form | RX200 0.2 percent by mass | AO-60 0.3 percent by mass PEP-36 0.6 percent by mass | 0.89 |
| Example 14 | 14 | PBT | Significantly cylindrical form | RX200 1.3 percent by mass | AO-60 0.3 percent by mass PEP-36 0.6 percent by mass | 0.84 |
| Example 15 | 15 | PBT | Significantly cylindrical form | SPF 20 0.8 percent by mass | AO-60 0.3 percent by mass PEP-36 0.6 percent by mass | 0.89 |
| Example 16 | 16 | PBT | Significantly cylindrical form | T805 0.8 percent by mass | AO-60 0.3 percent by mass PEP-36 0.6 percent | 0.89 |

| | | | | | | by mass | |
|---|---|---|---|---|---|---|---|
| Example 17 | 17 | PBT | Significantly hexagonal cylindrical form | - | | AO-60 0.3 percent by mass PEP-36 0.6 percent by mass | 0.86 |
| Comparative Example 1 | 18 | PBT | Non-pillar-like form | - | | - | 0.76 |
| Comparative Example 2 | 19 | PBT | Non-pillar-like form | - | | - | 0.85 |
| Comparative Example 3 | 20 | PBT | Non-pillar-like form | RX200 0.8 percent by mass | | - | 0.85 |
| Comparative Example 4 | 21 | PA66 | Non-pillar-like form | - | | - | 0.79 |

| | Resin powder No. | Resin powder for solid freeform fabrication | | | | |
|---|---|---|---|---|---|---|
| | | Ratio of particle having no point at end: 75 percent or greater | Ratio of long side of base to height | Specific gravity | Tap density (g/mL) | Particle diameter ratio (Mv/Mn) |
| Example 1 | 1 | A | 1 | 1.36 | 0.87 | 1.16 |
| Example 2 | 2 | A | 1 | 1.36 | 0.85 | 1.1 |

| | | | | | | |
|---|---|---|---|---|---|---|
| Example 3 | 3 | A | 1 | 1.09 | 0.75 | 1.15 |
| Example 4 | 4 | A | 1 | 1.4 | 0.83 | 1.2 |
| Example 5 | 5 | A | 0.75 | 0.96 | 0.6 | 1.11 |
| Example 6 | 6 | A | 0.85 | 1.32 | 0.75 | 1.27 |
| Example 7 | 7 | A | 0.7 | 1.41 | 0.81 | 1.23 |
| Example 8 | 8 | A | 1.6 | 1.36 | 0.82 | 1.12 |
| Example 9 | 9 | C | 1 | 1.36 | 0.74 | 1.12 |
| Example 10 | 10 | A | 1 | 1.36 | 0.9 | 1.11 |
| Example 11 | 11 | A | 1 | 1.36 | 0.73 | 1.13 |
| Example 12 | 12 | A | 1 | 1.36 | 0.87 | 1.16 |
| Example 13 | 13 | A | 1 | 1.36 | 0.87 | 1.16 |
| Example 14 | 14 | C | 1 | 1.36 | 0.87 | 1.16 |
| Example 15 | 15 | A | 1 | 1.36 | 0.87 | 1.16 |
| Example 16 | 16 | A | 1 | 1.36 | 0.87 | 1.16 |
| Example 17 | 17 | A | 1 | 1.36 | 0.89 | 1.16 |
| Comparative Example 1 | 18 | C | - | 1.32 | 0.52 | 1.49 |
| Comparative Example 2 | 19 | C | - | 1.32 | 0.6 | 1.65 |
| Comparative Example 3 | 20 | C | - | 1.32 | 0.68 | 1.66 |
| Comparative Example 4 | 21 | C | - | 1.07 | 0.48 | 1.59 |

In Table 1, the product names and the manufacturing companies of the ingredients are as follows:

- PBT: polybutylene terephthalate resin, NOVADURAN® 5020, melting point of 218 degrees C, glass transition temperature of 43 degrees C, manufactured by Mitsubishi Engineering-Plastics Corporation
- PA66: polyamide 66 resin, Leona™ 1300S, melting point of 265 degrees C, manufactured by Asahi Kasei Chemicals Corporation
- PA9T: polyamide 9T resin, Genestar ™N1000A, melting point of 306 degrees C, manufactured by KURARAY CO., LTD.
- PP: polypropylene resin, NOVATEC™ MA3, melting point of 130 degrees C, glass transition temperature of 0 degrees C, manufactured by JAPAN POLYPROPYLENE

CORPORATION

- PEEK: polyether ether ketone resin, HT P22PF, melting point of 334 degrees C, glass transition temperature of 143 degrees C, manufactured by Victrex plc.
- POM: Polyacetal resin, Iupital® F10-01, melting point of 175 degrees C, manufactured by Mitsubishi Engineering-Plastics Corporation
- RX200: AEROSIL RX200, surfactant HMDS, average primary particle diameter of 12 nm, amount of charge of -200 $\mu$C/g, hydrophobic fumed silica, manufactured by Nippon Aerosil Co., Ltd.
- SFP-20: SFP-20MHH, surfactant HMDS, average primary particle diameter of 400 nm, ultra fine spherical particle silica, manufactured by Denka Company Limited
- T805: AEROXIDE T805, surfactant: octyl trimethoxysilane, average primary particle diameter of 21 nm, octyl silated titanium oxide, manufactured by Nippon Aerosil Co., Ltd.

Thus-obtained resin powder for solid freeform fabrication was evaluated in the following manner for dimension accuracy, surface property (orange peel property), tensile strength, and recyclability. The results are shown in Table 1.

Dimension Accuracy

A solid freeform fabrication object was manufactured by an SLS method fabrication device (AM S5500P, manufactured by Ricoh Company, Ltd.), using the obtained resin powder for solid freeform fabrication. The condition was that the average thickness of the powder layer was 0.1 mm, the laser output was from 10 to 150 Watt, laser scanning space was 0.1 mm, and the bed temperature was set to a temperature -3 degrees C lower than the melting point of the resin.
The sample for dimension accuracy was a cuboid having a side of 50 nm with an average thickness of 5 mm, and a solid freeform fabrication object was manufactured based on CAD data as a sample. The difference between the CAD data for the sample for evaluating dimension accuracy and the length of each side of the sample actually fabricated was calculated and the average thereof was determined as the dimension difference to evaluate the dimension accuracy according to the following criteria:

Evaluation Criteria

S: Dimension difference is 0.02 mm or less
A: Dimension difference is greater than 0.02 to 0.05 mm
B: Dimension difference is greater than 0.05 to 0.10 mm
C: Dimension difference is greater than 0.10 mm

Surface Property (Orange Peel Property)

Using the sample of the solid freeform fabrication used for the evaluation of dimension accuracy, the surface was visually observed, observed with optical microscope, and subject to an organoleptic test. In the organoleptic test, the sample was touched by hands and the surface property, in particular smoothness, was evaluated from the tactile impression. These results were collectively checked to evaluate the surface property (orange peel property) based on the following evaluation criteria.

Evaluation Criteria

S: Very smooth surface with no annoying rough portion or coarse surface
A: No problem about smoothness on surface, and roughness and coarse surface allowable
B: No smooth surface with clearly visible rough portion and coarse surface
C: Hooked on surface and many defects such as roughness and distortion of surface recognized

Tensile Strength

Using the same device and conditions as with manufacturing of the sample for evaluation on accuracy, (a) five tensile test specimens were fabricated at the center with the long side aligned to the direction of Y axis in the longitudinal direction of the tensile test specimen. The gap between each fabrication layer was 5 mm. Next, (b) a cuboid having a side of 50 mm and an average thickness of 5 mm was manufactured. As the tensile test specimen, a multi-purpose dog-bone-like test specimen (specimen having a center portion of a length of 80 mm, a thickness of 4 mm, and a width of 10 mm) having a length of 150 mm of ISO 3167 Type 1A regulation was used.
The thus-obtained solid freeform fabrication object was subject to the tensile test by using a tensile strength tester (AGS-5kN, manufactured by Shimadzu Corporation) in accordance with ISO 527 regulation to measure the tensile strength of the obtained solid freeform fabrication object. The test speed in the tensile strength test was 50 mm/minute. The solid freeform fabrication object manufactured for the first time was subject to the tensile test five times. The average of the obtained five measuring values was defined as the initial value. Using this average of the tensile strength, the tensile strength was evaluated based on the following evaluation criteria.

Evaluation Criteria

S: Tensile strength is 100 MPa or greater
A: Tensile strength is from 50 to less than 100 MPa
B: Tensile strength is from 30 to less than 50 MPa
C: Tensile strength is less than 30 MPa

Recyclability

Extra powder used during manufacturing of the surface texture object for use in the evaluation of dimension accuracy, surface property, and tensile strength was returned to the supply bed of the device for solid freeform fabrication, and a solid freeform fabrication object was manufactured using the used resin powder. This operation was repeated ten times to evaluate recyclability based on the following evaluation criteria.

Evaluation Criteria

5: No warp or deformation was recognized and the decline rate to the initial value of the tensile strength is less than 15 percent after the reuse ten times
4: Warp or deformation was slightly recognized and the decline rate to the initial value of the tensile strength is from 15 to less than 20 percent after the reuse ten times
3: Warp or deformation was slightly recognized and the decline rate to the initial value of the tensile strength is from 20 to less than 30 percent after the reuse ten times
2: Warp or deformation was recognized and the decline rate to the initial value of the tensile strength is from 30 to less than 40 percent after the reuse ten times
1: Warp or deformation was recognized and the decline rate to the initial value of the tensile strength is 40 percent or greater

Table (note that examples 9 and 14 are reference examples, not according to the invention)

| | | Evaluation result | | | |
|---|---|---|---|---|---|
| | | Dimension accuracy | Surface property | Tensile strength | Recyclability |
| Example | 1 | S | A | S | 5 |
| | 2 | A | A | S | 5 |
| | 3 | S | S | A | 4 |
| | 4 | A | S | S | 4 |
| | 5 | S | A | B | 5 |
| | 6 | A | A | S | 5 |
| | 7 | A | A | A | 5 |
| | 8 | S | A | A | 5 |
| | 9 | A | A | A | 3 |
| | 10 | S | A | S | 3 |
| | 11 | S | A | S | 5 |
| | 12 | S | S | s | 5 |
| | 13 | S | s | s | 5 |
| | 14 | S | S | A | 5 |
| | 15 | S | S | A | 5 |
| | 16 | S | S | S | 5 |
| | 17 | S | S | s | 5 |
| Comparative Example | 1 | B | B | B | 2 |
| | 2 | A | B | B | 2 |
| | 3 | A | A | B | 2 |
| | 4 | A | B | A | 4 |

**Claims**

1. A resin powder for solid freeform fabrication comprising:
   pillar-like form particles having an average circularity of 0.85 to 0.98 in a particle diameter range of from 0.5 to 200 $\mu$m.

2. The resin powder according to claim 1, wherein the pillar-like form particles having no points at end portions thereof.

3. The resin powder as claimed in claim 2, wherein the proportion of the pillar-like form particles having no points at end portion to all resin powder for solid freeform fabrication is at least 50 percent.

4. The resin powder as claimed in claim 3, wherein the powder comprising the pillar like form particles is powder that has been subjected to a spheroidizing treatment, whereby the proportion of the pillar-like form particles having no points at end portion to all resin powder for solid freeform fabrication is at least 50 percent.

5. The resin powder according to any one of claims 1 to 4, wherein the pillar-like form particles have a base having a long side of from 5 to 200 $\mu$m and a height of from 5 to 200 $\mu$m.

6. The resin powder according to any one of claims 1 to 5, wherein a ratio of the height to the long side is from 0.5 to 2.

7. The resin powder according to any one of claims 1 to 6, wherein the resin powder has a particle diameter ratio of a volume average particle diameter to a number average particle diameter of 2.00 or less.

8. The resin powder according to any one of claims 1 to 7, wherein the resin powder has a specific gravity of 0.8 or greater.

9. The resin powder according to any one of claims 1 to 8, further comprising at least one member selected from the group consisting of polyolefin, polyamide, polyester, polyarylketone, polyphenylene sulfide, a liquid crystal polymer, polyacetal, polyimide, and a fluorochemical resin.

10. The resin powder according to any one of claims 1 to 9, wherein the resin powder has a fluidizer attached to a surface thereof.

11. The resin powder according to claim 10, wherein the fluidizer has an average primary particle diameter of 500 nm or less.

12. The resin powder according to claim 10 or 11, wherein the fluidizer contains at least one of silica and titania.

13. A device for manufacturing a solid freeform fabrication object, comprising:

a layer forming device configured to form a layer containing the resin powder of any one of claims 1 to 12; and
a powder adhesion device configured to cause the resin powder to adhere to each other in a selected area of the layer.

14. The device according to claim 13, wherein the powder adhesion device includes a member configured to emit electromagnetic wave.

15. A method for producing a resin powder for solid freeform fabrication as claimed in any one of claims 1 to 12, by a method selected from the group consisting of:

pulverizing a resin pellet and classifying the obtained powder;
preparing fiber or film form of a resin followed by cutting to directly obtain a significantly cylindrical form;
preparing fiber or film form of a resin followed by cutting to obtain a polygonal cylindrical form and subjecting to post processing.

**Patentansprüche**

1. Harzpulver für die Festkörper-Freiform-Herstellung, umfassend:
Partikel säulenähnlicher Form, die eine durchschnittliche Rundheit von 0,85 bis 0,98 in einem Partikeldurchmesserbereich von 0,5 bis 200 $\mu$m aufweisen.

2. Harzpulver nach Anspruch 1, wobei die Partikel säulenähnlicher Form keine Spitzen an Endteilen davon aufweisen.

3. Harzpulver nach Anspruch 2, wobei der Anteil der Partikel säulenähnlicher Form, die keine Spitzen am Endteil aufweisen, im gesamten Harzpulver für die Festkörper-Freiform-Herstellung mindestens 50 Prozent beträgt.

4. Harzpulver nach Anspruch 3, wobei das Pulver, das die Partikel säulenähnlicher Form umfasst, Pulver ist, das einer Sphäroidisierungsbehandlung unterworfen worden ist, wodurch der Anteil der Partikel säulenähnlicher Form, die keine Spitzen am Endteil aufweisen, im gesamten Harzpulver für die Festkörper-Freiform-Herstellung mindestens 50 Prozent beträgt.

5. Harzpulver nach einem der Ansprüche 1 bis 4, wobei die Partikel säulenähnlicher Form einen Boden aufweisen, der eine lange Seite von 5 bis 200 $\mu$m und eine Höhe von 5 bis 200 $\mu$m aufweist.

6. Harzpulver nach einem der Ansprüche 1 bis 5, wobei ein Verhältnis der Höhe zu der langen Seite 0,5 bis 2 beträgt.

7. Harzpulver nach einem der Ansprüche 1 bis 6, wobei das Harzpulver ein Partikeldurchmesserverhältnis eines volumendurchschnittlichen Partikeldurchmessers zu einem zahlendurchschnittlichen Partikeldurchmesser 2,00 oder weniger beträgt

8. Harzpulver nach einem der Ansprüche 1 bis 7, wobei das Harzpulver eine relative Dichte von 0,8 oder mehr aufweist.

**9.** Harzpulver nach einem der Ansprüche 1 bis 8, ferner mindestens ein Element umfassend ausgewählt aus der Gruppe bestehend aus Polyolefin, Polyamid, Polyester, Polyarylketon, Polyphenylensulfid, einem Flüssigkristallpolymer, Polyacetal, Polyimid und einem fluorchemischen Harz.

**10.** Harzpulver nach einem der Ansprüche 1 bis 9, wobei das Harzpulver einen an einer Oberfläche davon befestigten Verflüssiger aufweist.

**11.** Harzpulver nach Anspruch 10, wobei der Verflüssiger einen durchschnittlichen primären Partikeldurchmesser von 500 nm oder weniger aufweist.

**12.** Harzpulver nach Anspruch 10 oder 11, wobei der Verflüssiger mindestens eines von Siliciumdioxid und Titandioxid enthält.

**13.** Vorrichtung für die Herstellung eines Festkörper-Freiform-Herstellungs-Objekts, umfassend:

eine schichtbildende Vorrichtung, die zum Bilden einer Schicht konfiguriert ist, die das Harzpulver nach einem der Ansprüche 1 bis 12 enthält; und
eine Pulveradhäsionsvorrichtung, die konfiguriert ist, um zu verursachen, dass das Harzpulver aneinander in einem ausgewählten Bereich der Schicht haftet.

**14.** Vorrichtung nach Anspruch 13, wobei die Pulveradhäsionsvorrichtung ein Element umfasst, die zum Emittieren elektromagnetischer Welle konfiguriert ist.

**15.** Verfahren für die Herstellung eines Harzpulvers für die Festkörper-Freiform-Herstellung nach einem der Ansprüche 1 bis 12 durch ein Verfahren ausgewählt aus der Gruppe bestehend aus:

Pulverisieren eines Harzpellets und Klassifizieren des erhaltenen Pulvers;
Herstellen von Faser- oder Folienform eines Harzes, gefolgt von Schneiden, um eine im Wesentlichen zylindrische Form direkt zu erhalten;
Herstellen von Faser- oder Folienform eines Harzes, gefolgt von Schneiden, um eine polygonale zylindrische Form zu erhalten, und Unterwerfen einer Nachbearbeitung.

**Revendications**

**1.** Poudre de résine pour la fabrication de forme libre solide comprenant:
des particules en forme de pilier ayant une circularité moyenne de 0,85 à 0,98 dans une plage de diamètres de particules de 0,5 à 200 $\mu$m.

**2.** Poudre de résine selon la revendication 1, dans laquelle les particules en forme de pilier n'ont pas de pointes à leurs parties d'extrémité.

**3.** Poudre de résine telle que revendiquée selon la revendication 2, dans laquelle la proportion des particules en forme de pilier n'ayant pas de pointes à leur partie d'extrémité par rapport à l'ensemble de la poudre de résine pour la fabrication de forme libre solide est d'au moins 50 pour cent.

**4.** Poudre de résine telle que revendiquée selon la revendication 3, dans laquelle la poudre comprenant les particules en forme de pilier est une poudre qui a été soumise à un traitement de sphéroïdisation, moyennant quoi la proportion des particules en forme de pilier n'ayant pas de pointes à la partie d'extrémité par rapport à l'ensemble de la poudre de résine pour la fabrication de forme libre solide est d'au moins 50 pour cent.

**5.** Poudre de résine selon l'une quelconque des revendications 1 à 4, dans laquelle les particules en forme de pilier ont une base ayant un côté long de 5 à 200 $\mu$m et une hauteur de 5 à 200 $\mu$m.

**6.** Poudre de résine selon l'une quelconque des revendications 1 à 5, dans laquelle un rapport de la hauteur au côté long est de 0,5 à 2.

**7.** Poudre de résine selon l'une quelconque des revendications 1 à 6, dans laquelle la poudre de résine a un rapport de diamètre de particule d'un diamètre de particule moyen en volume à un diamètre de particule moyen en nombre de 2,00 ou moins.

8. Poudre de résine selon l'une quelconque des revendications 1 à 7, la poudre de résine ayant une densité relative de 0,8 ou plus.

9. Poudre de résine selon l'une quelconque des revendications 1 à 8, comprenant en outre au moins un élément sélectionné dans le groupe constitué par la polyoléfine, le polyamide, le polyester, la polyarylcétone, le poly(sulfure de phénylène), un polymère à cristaux liquides, un polyacétal, un polyimide, et une résine fluorochimique.

10. Poudre de résine selon l'une quelconque des revendications 1 à 9, dans laquelle la poudre de résine a un agent fluidifiant fixé à une surface de celle-ci.

11. Poudre de résine selon la revendication 10, dans laquelle l'agent fluidifiant a un diamètre de particule primaire moyen de 500 nm ou moins.

12. Poudre de résine selon la revendication 10 ou 11, dans laquelle l'agent fluidifiant contient au moins l'un parmi la silice et l'oxyde de titane.

13. Dispositif de fabrication d'un objet de fabrication de forme libre solide, comprenant:

   un dispositif de formation de couche configuré pour former une couche contenant la poudre de résine selon l'une quelconque des revendications 1 à 12; et
   un dispositif d'adhésion de poudre configuré pour amener la poudre de résine à adhérer l'une à l'autre dans une zone sélectionnée de la couche.

14. Dispositif selon la revendication 13, dans lequel le dispositif d'adhésion de poudre comprend un élément configuré pour émettre une onde électromagnétique.

15. Procédé de production d'une poudre de résine pour la fabrication de forme libre solide telle que revendiquée selon l'une quelconque des revendications 1 à 12, par un procédé sélectionné dans le groupe constitué par:

   la pulvérisation d'une pastille de résine et la classification de la poudre obtenue;
   la préparation de la forme de fibre ou de film d'une résine suivie de la coupe pour obtenir directement une forme significativement cylindrique;
   la préparation de la forme de fibre ou de film d'une résine suivie de la coupe pour obtenir une forme cylindrique polygonale et la soumission à un post-traitement.

FIG. 1A

FIG. 1B

FIG. 1C

FIG. 1D

FIG. 1E

FIG. 1F

FIG. 1G

FIG. 1H

FIG. 1I

# FIG. 2

# FIG. 3

FIG. 4A

FIG. 4B

FIG. 4C

FIG. 4D

FIG. 4E

FIG. 4F

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009135521 A
- WO 2013138204 A
- WO 2008057844 A
- US 6531086 B